# EUROPEAN PATENT SPECIFICATION

(11) **EP 3 740 542 B1**
(45) Date of publication and mention of the grant of the patent: **20.07.2022**
(21) Application number: 19700414.6
(22) Date of filing: 15.01.2019
(51) Int. Cl.: C09J 11/00, C09J 103/02, C09J 129/04

(54) **NEW ADDITIVE TO IMPROVE ADHESIVE COMPOSITIONS**
NEUES ADDITIV ZUR VERBESSERUNG VON KLEBSTOFFZUSAMMENSETZUNGEN
NOUVEL ADDITIF POUR AMÉLIORER DES COMPOSITIONS ADHÉSIVES

(30) Priority: 15.01.2018 EP 18151729
(43) Date of publication of application: 25.11.2020
(73) Proprietor: C-IP S.A., 1468 Luxembourg (LU)
(72) Inventor: CEULEMANS, Philippe, 2300 Turnhout (BE); CEULEMANS, Olivier, 2360 Oud-Turnhout (BE)
(74) Representative: Gevers Patents
(86) International application number: PCT/EP2019/050941
(87) International publication number: WO 2019/138135

(56) References cited:
- WO-A1-89/07633
- WO-A1-2011/089053
- WO-A1-2016/158349
- WO-A2-02/42390
- JP-A- 2012 111 797

## Description

### FIELD OF THE INVENTION

The present invention relates to a new additive to improve adhesive compositions having their prime use in the cardboard industry. Such adhesive compositions are often based on a natural polymer as adhesive, typically starch and/or dextrin, but may also contain a suitable synthetic polymer, such as polyvinyl alcohol. The present invention is particularly concerned with adhesive compositions for use in food contact, even as part of foods.

### BACKGROUND OF THE INVENTION

For decades now, starch based adhesive compositions are the prime adhesives used in the production of corrugated cardboard.

Starch or amylum is a natural polymeric material which is found in almost every plant. It is a carbohydrate consisting of a large number of glucose units. It is produced by all green plants as an energy storage for storing their glucose as a polysaccharide polymer which is water insoluble and in a much more compact form than glucose. Starch molecules arrange themselves in the plant in semi-crystalline granules, and each plant species has a unique starch granular size. Native starch is a powder which is insoluble in cold water, but which may convert to a water soluble form when heated.

Many plants may be dried and milled or ground to obtain a starch-containing flour. This is a dry, simple and inexpensive process, and which leads to a flour containing starch together with other components, such as usually gluten and fibre. Starch in higher purity on the other hand is typically produced by a wet and more complex process, whereby a natural product such as corn is usually first softened to break the bonds between the individual components of the kernel, also called the steeping process, followed by wet milling or grinding, washing and screening or sieving to separate the other component parts in relatively high purity. Corn processing for instance leads to the so-called steepwater, containing all the water solubles, and further washing and separation leads to the starch, separated from the germ, the fibre and the gluten as co-products. The germ, gluten and fibres are dewatered and dried by use of filters, presses and dryers. The germ is usually further processed to recover corn oil, while the remaining fibre is typically returned for animal feed.

For the production of industrial and food starches, starch slurry from the washing and separation steps is usually dewatered in centrifuges to produce a starch "cake", which is then dispersed into a stream of heated air, and flash dried to the desired water content of about 10%. Great care must be taken to prevent the starch from overheating in the presence of moisture, because of the risk for gelation to start, and such a product may also exhibit an undesirably high sensitivity to caustic soda.

Today the principal sources of commercial starches are corn or maize, potato, tapioca and wheat, but also rice, sweet potato, sago, arrowroot and mung bean are used commercially.

The chemical makeup of the starch polymer makes it a good adhesive, a property which has been known and used since ancient history. Raw, untreated or ungelatinized starch, also labelled "pearl" starch, does not dissolve in cold water, i.e. in water at or below ambient temperature. The starch only becomes soluble in water when heated. In heated water, the granules swell and burst, the semi-crystalline structure is lost and the smaller amylase molecules start leaching out of the granule, forming a network which holds water and increasing the mixture's viscosity.

This transformation is called gelatinization. The gelatinization temperature, also known as gelatinization point, gel temperature or gel point, of a starch in water is the temperature at which the mixture begins to thicken and to develop its bonding properties. Although it is often expressed as a single temperature unit, in reality it is a temperature range, dependent on the molecular size and composition of the starch, and hence it strongly depends on the raw materials used. The gelatinization temperature of a starch is very important in the adhesive industry, as it sets the temperature required for the applied adhesive to gelatinize and to perform its bonding function after evaporation of the excess water.

For modern industrial applications however, with corrugating machines running at speeds in excess of 300 m/min, starch itself has become too slow in developing its adhesive properties, i.e. its "tack", and also its viscosity in water is too low. The "gelatinization temperature" of a pearl starch is typically 77°C or higher. It was found that the gelatinization temperature of a starch could be reduced, for instance by the addition of a base. Sufficient amount of a strong base, such as caustic soda or soda ash, may even fully gelatinize starch at ambient temperature or below, and convert it into a cold water soluble form. Industrial starch-based adhesives are therefore made rather strongly basic. Reduction of gelatinization temperature is a need which is driven by the desire for reducing the process energy requirements and increasing processing speeds. The conventional starch adhesive therefore typically contains a high amount of free base, usually NaOH.

The prime non-food application for starches is their use in the paper and corrugated cardboard industry, together consuming millions of metric tons of starch annually. Nearly all of the corrugated board produced today is bonded with a starch-based adhesive, primarily using unmodified native starches. An aqueous and raw starch-containing adhesive composition is applied onto the paper or cardboard surface, the water migrates into the porosity of the paper or cardboard and entrains the starch granules, which by applying heat and pressure, and assisted by the presence of a base, swell and gelatinize and act as a fast and strong adhesive by forming the network required for providing the desired bonding. Excess water, i.e. the water not absorbed by the starch granules, is then typically removed by vaporisation.

An adhesive containing only pearl starch and water, even with some caustic soda, is too low in viscosity for a good application of the adhesive. Various methods have been developed to increase the viscosity of the adhesive composition to be applied.

The conventional method is the Stein-Hall method wherein separately a "carrier" is produced. For this purpose, typically 15-20% of the (primary) starch is heated in the presence of a significant amount of (primary) water and caustic soda to form a viscous liquid or paste. This viscous carrier of gelatinized starch is then used as the basis for suspending the typically 80-85% secondary amount of pearl starch in water complemented with an additional, i.e. a secondary, amount of water, to form the target adhesive composition. The viscosity of this aqueous adhesive composition is primarily set by the amount and the viscosity of the carrier used in the final adhesive formulation. Usually a small amount of a boron compound, most frequently borax, a product chemically known as di-sodium tetraborate decahydrate, is finally added, primarily for buffering the caustic soda. The anion structure of the borax builds further interchain linkages between the already gelatinized starch polymer molecules, thereby further increasing the viscosity of the adhesive composition. The pH of a typical Stein-Hall adhesive is in the range of 11.5 to 13, but may sometimes be as high as 13.1.

Viscosity of the adhesive is a very important process parameter in the corrugating industry. With too low viscosity, the water tends to "wick" into the medium, i.e. diffuse away from the glue line and the pearl starch may not have sufficient water left to gelatinize completely, and hence not reach its full bonding properties. This may produce dry and brittle board coming off the corrugator, and which may fail the adhesion test. With too high viscosity, on the other hand, its penetration into the medium becomes too slow, leading to wide glue lines and thick bonds, thus to adhesive overconsumption, and also to overflow of the glue pans.

Another problem is that the viscosity of the adhesive composition, as primarily provided by the gelatinized starch in combination with the boron compound, is not stable. Viscosity is very temperature dependent. Tight temperature control of the adhesive composition is therefore required during its application and also in storage. The adhesive inventory may have to be reheated after a period of downtime, which has to be done carefully and thus is time consuming. Shear, such as it occurs at mixers, pumps, pipes, elbows or valves, at the corrugator and in the return lines to the adhesive inventory tank, breaks down the structure of the adhesive, and/or even more importantly of the gelatinised starch in its carrier, and this reduces the viscosity of the adhesive irreversibly. Therefore, where shear is inevitably applied, this shear must be applied and administered carefully. Production lines may be hundreds of meters long, and the adhesive may therefore need to be pumped, from a centralised "Glue kitchen" where it is prepared, over a distance of hundreds of meters to the point in the production line where it is to be applied. These transfer systems often comprise return lines for the adhesive as well. Pumps should be carefully selected and properly designed. The viscosity of a starch-based adhesive is also not constant over time, as the raw portion of the adhesive will begin to separate from the cooked portion, causing the viscosity to drop. Also gel temperature will rise the longer the adhesive is held in storage, because of a slow adsorption of free caustic into the starch. Fast turnover of the adhesive and limited inventory during down periods are therefore advised.

Another problem is a phenomenon called "spinning". When the adhesive is applied to the tops of the corrugations or flutes and the corrugated substrate separates from the applicator roll, the adhesive forms threads before breaking up. When these threads break and the adhesive jumps back to the substrate, a part of it typically ends up away from the desired location, called the "glue line". This part does not participate in the desired bonding function. More adhesive must therefore be applied, which increases the consumption and also the energy requirements of the process, as well as the risk for undesired temperature effects. The extra adhesive also increases the risk for malformation, in particular with thin substrates.

WO 2011/089053 A1 discloses an improvement to the conventional Stein-Hall adhesive, in which a cross-linked polyacrylic acid polymer was used to form a carbomer gel instead of the carrier based on primary starch. Variants without borax and/or without free caustic soda are also described. The carbomer gel was introduced and mixed with starch and water to form an adhesive showing low viscosity at high shear forces and high viscosity at low shear forces, a viscosity behaviour which was also fairly stable over time. Similar results were obtained with polyvinyl alcohol and dextrin as adhesive component.

In the cardboard industry, before the introduction of starch, sodium (meta)silicate used to be the adhesive component of choice. Alkali metasilicates, a group of chemicals which is often collectively called "waterglass", are inexpensive, fire resistant, vermin resistant, recyclable, easy to apply, having a long shelf life and providing excellent strength to the products in which they are used. However, alkali metasilicates also have a number of disadvantages which have caused the discontinuation of their uses in corrugated cardboard production. Starch has been successful in replacing sodium metasilicate, or the group of suitable silicates in general, primarily because the polymerization reaction of silicate is rather slow and the technology was unable to cope with the increasing demands for higher processing speeds.

WO 93/00220 and US 6,875,299 B1 disclose the production of a laminated structure comprised of alternating smooth and corrugated sheets of a paper-web, using sodium silicate ("waterglass") as the adhesive.

A problem with cardboard made with an adhesive uniquely based on waterglass as the adhesive component is that after a few years the glue becomes brittle and readily breaks, with the result that the adhesive bond loses and the connection between the fibres in the substrates is broken.

Another problem with waterglass is that during the cardboard production some of the adhesive usually ends up on the rolls and other parts of the processing equipment, and these are often hot. The water in the adhesive evaporates and leaves a dry residue. The problem with waterglass is that the silicate upon drying forms hard and brittle, glass-like residues. This residue needs to be removed at regular intervals. The residue however readily breaks up into pieces having very sharp edges. They represent a significant safety and industrial hygiene hazard for operating and maintenance personnel, and may also cause damage to the equipment itself. The brittleness of the bond also remains in the final product, where it has been reported as causing a safety issue at the consumer end. This last issue made the need for its replacement even more compelling.

Starch successfully replaced the inorganic silicate technology in this application. Starch exhibits performance properties which are superior in quick bond formation and does not form a tough deposit. The silicate could not keep up with the increasing processing speeds in cardboard production. Thanks to the influence of the strong base and of the boron compound on the starch, primarily on its gelation performance, the starch technology also proved to be much more flexible in following the trend of ever increasing processing speeds, and greatly outperformed the older silicate-based adhesive solutions.

Mixed systems based on sodium silicate in combination with another adhesive such as starch were also proposed.

US 6,228,158 describes a dry pre-blended carrier starch for Stein-Hall-type corrugating adhesive compositions comprising modified starch and sodium metasilicate as the dry alkali. The sodium metasilicate brings the pH of the carrier blend up to a similar level as the caustic in the conventional process. Under moderate heating to about 57.2 °C (135 °F), the metasilicate also causes a significant gelation of the starch, which allowed to prepare a Stein-Hall primary carrier without the need for caustic, which in addition exhibited superior storage and viscosity stability. According to US 6,228,158, this process allowed to also eliminate the need for caustic at the corrugator or at the time the corrugating adhesive is prepared.

WO 98/50478 discloses a Stein-Hall adhesive of which the carrier portion was based on modified corn starch. Sodium silicate was added to the carrier, which allowed the preparation of an adhesive with a higher solids content and which exhibited unusually good high temperature stability. The adhesive was stated to reduce the energy costs in the manufacture of boxboard and to provide corrugated board showing superior bond strength and edge crush strength. WO 98/50478 does warn that alkali silicates are prone to deposit a tough, intractable glass on any surfaces upon which they are allowed to dry. The document does not claim to have overcome this problem.

Some of the problems with waterglass in paper and cardboard adhesives have been solved by using a combination of waterglass and another adhesive component, such as starch, as disclosed in the publications discussed above. The combination of waterglass and starch however still faces the problem of equipment fouling and damage, and of industrial hygiene and personnel safety. In spite of the recognition that waterglass is able to enforce the adhesive bond of a starch-based adhesive, this issue has been seen as a major reason for the low current use of waterglass in this application.

Therefore, there remains for the production of corrugated cardboard a need for an adhesive composition which brings an enforced adhesive bond, but which does not bring the maintenance problems nor the safety and industrial hygiene hazards associated with the use of silicates.

The present invention aims to obviate or at least mitigate the above described problem and/or to provide improvements generally.

### SUMMARY OF THE INVENTION

The inventors have now surprisingly found that it is possible to provide an additive and an adhesive composition, their uses, and methods and kits in parts for their production, as defined in any of the accompanying claims, for fulfilling the above mentioned needs.

In an embodiment, the invention provides an additive composition for an adhesive composition, the additive composition being in the form of an aqueous composition, a dry powder mixture or a kit in parts, and the additive composition comprising a cross-linked carbomer and a metasilicate of an alkali metal and/or an alkaline earth metal, wherein the carbomer and the metasilicate are present in the additive composition in a weight ratio of carbomer over metasilicate which is higher than 0.50 and at most 2.50, and wherein, if the additive composition is in the form of a dry powder mixture, the metasilicate is present in the dry powder mixture in a concentration of at least 1.70%wt.

In another embodiment, the present invention provides an adhesive composition comprising at least one starch and/or at least one dextrin and/or at least one polyvinyl alcohol, the composition further comprising a carbomer and an alkali metal silicate or an alkaline earth metal silicate, preferably the metasilicate. The adhesive composition may be in the form of an aqueous composition, a dry powder mixture or a kit in parts.

In another embodiment, the present invention provides an adhesive composition being in the form of an aqueous composition, a dry powder mixture or a kit in parts, the adhesive composition comprising at least one adhesive component selected from starch, dextrin and polyvinyl alcohol, the composition further comprising an amount of the additive composition according to the present invention.

In an embodiment, the present invention provides a method for preparing the additive composition or the adhesive composition according to the present invention, the method comprising the step of mixing the carbomer and the metasilicate.

In an embodiment, the present invention provides the use of the additive composition according to the present invention for improving the adhesive performance of an adhesive composition.

In an embodiment, the present invention provides a method for preparing the adhesive composition according to the present invention, the method comprising the step of mixing the carbomer and the metasilicate.

In an embodiment, the present invention provides the use of the adhesive composition according to the present invention for forming an adhesive bond with a substrate to produce an article comprising the substrate and the adhesive bond.

In an embodiment, the present invention provides a method for producing an article comprising the step of applying the adhesive composition according to the present invention to a sheet of fibres, cloth, paper, cardboard or corrugated cardboard.

The applicants have surprisingly found that the carbomer impairs and even appears to prevent the formation of the 3-dimensional structure of polymerized silicate. Without wanting to be bound by this theory, the applicants belief that this effect is caused by an interaction between the polar groups of the silicate on the one hand and the polarity of the carboxylic acid and/or ester groups in the carbomer.

Surprisingly the applicants have further found that the carbomer does not appear to affect the performance improvement of the silicate on the adhesive bond formed by an adhesive composition based on an adhesive compound selected from starch, dextrin and polyvinyl alcohol.

The applicants have thus found that the presence of the carbomer in the adhesive allows to add a silicate, and hence enjoy an improved adhesive bond, without suffering the drawbacks associated with a silicate, i.e. the brittleness of the adhesive bond over the long term, and of the residue forming on the processing equipment, and this in particular with the formation of adhesive bonds with paper and/or cardboard as a substrate.

The inventors have further found that the use of the silicate, and hence also the use of the additive composition according to the present invention, brings the advantages that the adhesive composition is improved in terms of their "tack", their penetration into the porous substrate, typically paper, and of their water retention. The inventors have found that these advantages are particularly noticeable and pronounced with adhesive compositions formulated without a boron compound and/or without free caustic soda.

The applicants have further found that the use of the silicate, and hence also the use of the additive composition according to the present invention, also reduces the surface tension of the adhesive composition, which brings the advantage of an improved penetration of the adhesive composition into the substrate to be glued. This brings the advantage that higher processing speeds may be used, and also that the eventual adhesive bond may be stronger yet require less adhesive compound.

The applicants have found that the carbomer present in the additive composition and/or in the adhesive composition according to the present invention, even in low concentrations, is a strong contributor for building viscosity, and also a strong contributor in reducing the gel point of starch and/or dextrin, such that the composition is readily suitable for the corrugating process without needing the additional cross-linking effect of a boron compound and/or with a lower amount of gelatinized starch and/or dextrin, as well as needing less caustic soda for gel point reduction and thus not requiring a high pH. This reduces, and possibly avoids the need for gelatinizing a significant part of the starch only for building viscosity, such as for the conventional Stein-Hall adhesive or one of its known variants. More, if not all, of the starch and/or dextrin present in the adhesive remains thus available for participating in the bonding function, and the composition thus represents a more effective use of the starch. It also reduces the caustic soda need and opens the possibility to have a substantially boron-free adhesive composition.

The applicants have found that the carbomer itself may affect and reduce the gel point of starch and/or dextrin, such that less base may be required to obtain a desired gel point reduction. This brings the advantage that less or no free base may be present in the composition. The applicants have further found that the carbomer reduces the gel point of the starch and/or dextrin sufficiently to make the adhesive composition by itself suitable for application, such that the addition of caustic soda may not anymore be required. The applicants have further found that also the addition of a boron compound, such as borax, is not anymore required and may also possibly be dispensed with. The adhesive composition according to the present invention may thus be substantially free of free strong base or free of free caustic soda, and/or may be substantially free of any boron containing compounds, such as borax. This brings the advantage that the invention may provide an adhesive composition which may be used without raising any of the recent toxicity and/or industrial hygiene concerns associated with boron, borax and/or caustic soda.

In combination with polyvinyl alcohol based adhesives, the applicants have found that the carbomer, and hence also the additive composition according to the present invention, also provides the effect of improving the tack and/or the spin of the adhesive composition, and that the use of boron components therefore becomes less or not desirable and may optionally be dispensed with. The present invention therefore provides also for an adhesive composition containing polyvinyl alcohol causing less spinning problems and which may possibly be free of boron containing compounds such as borax.

The applicants have further found, when starch and polyvinyl alcohols are both present in the adhesive composition according to the present invention, that the biological degradation of the composition is improved.

The applicants have found that the carbomer, and hence also the additive composition according to the present invention, brings the same effect as boron to any dextrin adhesive component in the composition, and that therefore the boron concentration in the adhesive composition may be reduced, up to the point that the composition may be boron free. At the same time the amount of strong base, such as caustic soda, in the adhesive composition may be reduced, and possibly up to the point where little to no free strong base is required anymore, thanks to the presence of the carbomer.

A further advantage is that the viscosity of the adhesive composition according to the present invention is readily predictable by setting the concentration of the carbomer, and thus if applicable also of the additive composition according to the present invention. The viscosity is also readily adjustable and correctable, upwards by adding more carbomer and/or more of the additive composition according to the present invention, and downwards by adding more water. This brings significant simplifications when one adhesive preparation step needs to supply different downstream users requiring adhesives with different physical properties, such as the single facer and the double backer of a corrugating process.

The viscosity of the adhesive composition according to the present invention is also more stable over time and degrades less upon exposure of the adhesive composition to shear and/or microbiological attack. In addition, the adhesive composition according to the present invention exhibits non-newtonian rheology behaviour, which is so desired in the application process, bringing the advantage of a low viscosity under high shear, such as between the applicator roll and the doctor roll in the application process, and of a high viscosity under low shear, such as when the corrugated substrate separates from the applicator roll. The applicants have found that the "spinning" phenomenon may be entirely avoided, as well as the "wicking" phenomenon. This brings the advantages that a more effective use of adhesive is possible, and that the energy needs of the process in terms of mechanical and heating energy are reduced, and also brings the possibility to process thinner substrates and to operate the process at higher processing speeds.

### DETAILED DESCRIPTION

The present invention will hereinafter be described in particular embodiments, but the invention is not limited thereto, but only by the claims.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than those described and/or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

Unless specified otherwise, all values provided herein include up to and including the endpoints given, and the values of the constituents or components of the compositions are expressed in weight percent or % by weight of each ingredient in the composition.

Additionally, each compound used herein may be discussed interchangeably with respect to its chemical formula, chemical name, abbreviation, etc..

Also polyvinyl alcohols are used as adhesive components in adhesive composition, optionally in combination with other adhesive components such as a starch and/or a dextrin.

Another type of adhesives employ dextrin as one of, or as the sole adhesive components. Dextrins are a group of low molecular weight carbohydrates obtainable by the hydrolysis of starch. Dextrins are polysaccharides formed by heating dry or acid-modified starches in a process called pyrolysis. They can be used at higher solids levels than native or modified starches, creating stronger bonds, more tack and faster-drying properties than pastes made from unmodified starch. Dextrin pastes provide excellent machinability and also can be used in adhesives and coatings which come in contact with food products.

Frequently dextrin adhesives, as starch based adhesives, are formulated with boron compounds such as borax (short for sodium tetraborate) to obtain high tack at moderate concentrations and viscosities with good aging characteristics. They also have good adhesion and machining properties. The borax is generally added in amounts of up to 10% based on dry starch or dextrin. Sodium hydroxide is also added to convert the borax to more active sodium metaborate. Applications include case sealing, carton sealing, bag seams, tube winding, and laminating.

In an adhesive composition containing at least one polyvinyl alcohol as the adhesive component, boron components such as borax are often added to the composition in order to improve the tack and/or of the so-called spin or spinning behaviour and associated problems, as explained above, of the composition.

The applicants have found that selecting polyvinyl alcohol (PVA) and/or dextrin as the adhesive components allows to prepare so-called "cold" adhesives. The applicants have further found that the performance of such "cold" adhesive may also benefit from the addition of the metasilicate, and hence of the additive composition according to the present invention.

In an embodiment of the present invention, the use of the additive composition according to the present invention is for improving the adhesive performance of a cold adhesive composition comprising dextrin and/or polyvinyl alcohol, preferably the cold adhesive composition being used in the production of corrugated cardboard.

In an embodiment, the adhesive composition according to the present invention contains dextrins as adhesive component, and may even be dextrin-based. Dextrin brings the advantage of increased water solubility, permitting the preparation of quick drying, high solids pastes that are extremely tacky. In addition the viscosity of the paste becomes much more stable. Frequently dextrin adhesives and many starch based adhesives are formulated with boron compounds such as borax (sodium tetraborate) to obtain high tack at moderate concentrations and viscosities with good aging characteristics. They also have good adhesion and machining properties. The borax is generally added in amounts of up to 10% based on dry starch. Sodium hydroxide is also added, as believed to convert the borax to more active sodium metaborate. Applications include case sealing, carton sealing, bag seams, tube winding, and laminating.

In the context of the present invention, the adhesive component comprises all the starch present in the composition, including any gelatinised starch if any of such starch is present.

In the context of the present invention, cold water insoluble starch is defined as raw starch, i.e. starch which is not yet partially or entirely converted to the cold water soluble form by heating and/or treating with a base such as NaOH. The total amount of starch, the amount of cold water soluble or gelatinized starch and the amount of cold water insoluble or ungelatinized starch may be determined by methods known per se in the art. We prefer to use the so-called enzymatic method, such as described by H.M.Blasel et al. in "Degree of starch access: An enzymatic method to determine starch degradation potential of corn grain and corn silage", in Animal Feed Science and Technology, 128 (2006), 96-107, and in the literature references thereof, such as by Varriano-Marston et al., "Comparison of methods to determine starch gelatinization on bakery foods, Cereal Chem. 57 (1980), 242-248.

Native starches are capable of yielding high degrees of water resistance, which may be necessary for labelling, bill posting, and other applications. Improved cold water resistance can be obtained with polyvinyl alcohol or polyvinyl acetate blends. These adhesives will also dissolve in hot water, which is often a benefit. Optimal moisture resistance is obtained through the addition of thermosetting resins, such as urea formaldehyde or resorcinol formaldehyde.

The adhesive composition according to the present invention may comprise at least one further adhesive component selected from the group consisting of starch, polyvinyl alcohol, ethylene vinyl acetate (EVA) copolymer, dextrin, a polyurethane adhesive. The composition may further comprise also an adhesion promoter, which in the context of the present invention is considered as an additional adhesive component.

The term "carbomer" refers to carboxyvinyl polymers. The carboxyvinyl polymers have an approximate molecular weight of from about 50,000 to about 6 million daltons. The polymers are characterized as having carboxylic acid functional groups. Preferred carboxyvinyl polymers include water-soluble and water-swellable carbomers. Many such carbomers are available under the trade name CARBOPOL^{®} from Lubrizol Corporation. Carbomer polymers may be crosslinked, acrylic acid-based polymers. They may be cross-linked with allyl sucrose or allylpentaerythritol.

The carbomer in accordance with the present invention is preferably a homopolymer of (meth)acrylic acid and/or a copolymer of at least two monomers selected from acrylic acid, methacrylic acid, esters of acrylic acid or methacrylic acid, other acrylic comonomers and acrylamide.

In the context of the present invention, a carbomer is defined as a water soluble polymer comprising as a monomer an unsaturated acid, or a derivative thereof such as an ester or amide, which may preferably be represented by the formula CH₂=CR-CO-G or CH₂=CR-COO-A¹. In this formula, R represents a substituent selected from the group of H, monovalent alkyl, aryl or alkylaryl radicals and monovalent cyclo alkyl radicals, although H as the substituent is preferred, with CH₃ a very acceptable second choice. Nevertheless, R may also be selected from the group of alkyl, alkoxy, haloalkyl, cyanoalkyl and similar groups containing 1 to 9 carbon atoms. G may represent an amine group -NL₂, such as -NH₂, in which case the monomer is preferably acrylamide or methacrylamide. A¹ and/or L may independently from R and G represent a substituent selected from the group of H, monovalent alkyl, aryl or alkylaryl radicals and monovalent cyclo alkyl radicals, although H as the substituent is preferred, in which case the monomer may be an unsaturated carboxylic acid. Nevertheless, A¹ and/or L may also be selected from the group of alkyl, alkoxy, haloalkyl, cyanoalkyl and similar groups containing 1 to 35 carbon atoms.

The carbomer preferably is primarily or entirely a homopolymer of (meth)acrylic acid or methacrylic acid, or a copolymer of mixtures thereof, and which may be cross-linked.

Optionally, other comonomers or copolymers may be used. Further to a monocarboxylic acid and/or its ester, use may also be made of a polycarboxylic acid and/or its ester as comonomer, such as an acrylate or methacrylate, and optionally an alkyl alkoxylated ester, such as an alkyl alkoxylated acrylate or methacrylate, which may be a C₁₅-C₃₅ alkyl alkoxylated acrylate or methacrylate. In particular, olefinically unsaturated carboxylic acids containing at least one carbon-carbon olefinic double bond, and at least one carboxyl group are preferred, and/or esters thereof. Suitable examples include acrylic acids, in particular acrylic acid, methacrylic acid, ethacrylic acid, alpha-cyano acrylic acid, beta-methylacrylic acid (crotonic acid), alpha-phenyl acrylic acid, beta-acryloxy propionic acid, cinnamic acid, p-chloro cinnamic acid, 1-carboxy-4-phenyl-1,3-butadiene, 3-acrylamido-3-methylbutanoic acid, itaconic acid, citraconic acid, mesaconic acid, glutaconic acid, aconitic acid, maleic acid, fumaric acid, and tricarboxy ethylene. Examples of suitable polycarboxylic acids include acid anhydrides, such as maleic anhydride, wherein the anhydride group is formed by the elimination of one molecule of water from two carboxyl groups located on the same carboxylic acid molecule. However, acrylic and methacrylic acid are preferred.

The alkyl alkoxylated acrylate or methacrylate is a hydrophobic co-monomer. The hydrophobic co-monomer will usually be an ester of an acid or a mixture of two or more thereof, and it may include one of the various known (meth)acrylates or (meth)acrylamides.

The alkyl group of the alkyl alkoxylated (meth)acrylate may contain 5-30 carbon atoms, preferably 15-30, more preferably 20-25 carbon atoms. The alkyl structure may contain primary, secondary, or tertiary carbon configurations. Examples of suitable alkyl alkoxylated acrylates include methoxymethyl acrylate, methoxyethyl acrylate, ethoxyethyl acrylate, butoxyethyl acrylate, or ethoxypropyl acrylate. The alkyl structure may also contain a phenyl group, which may be substituted, and suitable alkyl structures are octylphenyl, nonylphenyl and dodecylphenyl structures, of which the alkoxylated derivatives, such as those containing 1-12 ethoxy and/or propoxy groups are readily commercially available.

The monomers in the carbomer may be octadecyl acrylate, behenyl acrylate, dodecyl acrylate, hexadecyl acrylate and the like; and cyano derivatives thereof; methacrylates such as steryl methacrylate, methyl methacrylate, ethyl methacrylate, octyl methacrylate, isopropyl methacrylate, 2-ethylhexyl methacrylate, n-hexyl methacrylate, octadecyl methacrylate, behenyl methacrylate, dodecyl methacrylate, hexadecylmethacrylate, and the like. Mixtures of two or three or more long chain acrylic esters may successfully be polymerized with one of the carboxylic acid and/or ester monomers. The preferred hydrophobic monomers are the linear, long chain hydrophobic monomers wherein the alkyl group contains at least 12 carbon atoms, such as stearyl methacrylate, hexadecyl methacrylate, and behenyl methacrylate. Optionally, a complex hydrophobe may be utilized containing polyalkyleneoxide branches capped with hydrophobic alkyl or alkylaryl groups.

For a (meth)acrylic acid ester of an alkoxylated alcohol the alkyl group is typically a C₈-C₂₄ alkyl; alkylaryl, including alkylphenyl groups such as octylphenyl and nonylphenyl; or the residue of a polycyclic hydrocarbyl compound such as lanolin or cholesterol. Suitable alkyl groups include tridecyl, myristyl, pentadecyl, cetyl, palmityl, stearyl, eicosyl, and behenyl or docosyl or mixtures thereof. Such a suitable monomer mixture may for instance originate from the alkoxylation of a mixture of lauryl, stearyl, cetyl, and palmityl alcohols.

The carbomer (co)polymer is preferably cross-linked. As cross-linking agent, various polyunsaturated monomers may be utilized, whereby either a partially or substantially cross-linked three-dimensional network is obtained. Suitable cross-linking agents include allyl ethers of sucrose or pentaerythritol, or other polyunsaturated monomers for example diallyl esters, dimethallyl ethers, allyl or methallyl acrylates and acrylamides, tetraallyl tin, tetravinyl silane, polyalkenyl methanes, diacrylates and dimethacrylates, divinyl compounds such as divinyl benzene, divinyl glycol, polyallyl phosphate, diallyloxy compounds, phosphite esters, and the like. Typical polyunsaturated monomers include di, tri, or tetra, penta, or hexaallyl sucrose; di, tri, or tetra-allyl pentaerythritol; diallylphthalate, diallyl itaconate, diallyl fumarate, diallyl maleate, divinylbenzene, allyl methacrylate, allyl citrate, ethylene glycol di(meth)acrylate, trimethylolpropane triacrylate, 1,6-hexanediol diacrylate, pentaerythritol triacrylate, tetramethylene diethacrylate, tetramethylene diacrylate, ethylene diacrylate, ethylene dimethacrylate, triethylene glycol methacrylate, methylene bisacrylamide, and the like. Castor oils or polyols, esterified with ethylenically unsaturated carboxylic acid and the like may also be used. Preferred crosslinking agents include allyl pentaerythritol, allyl sucrose, trimethylolpropane allyl ether, and divinyl glycol.

A preferred carbomer according to the present invention may be a polymer having the formula (I)

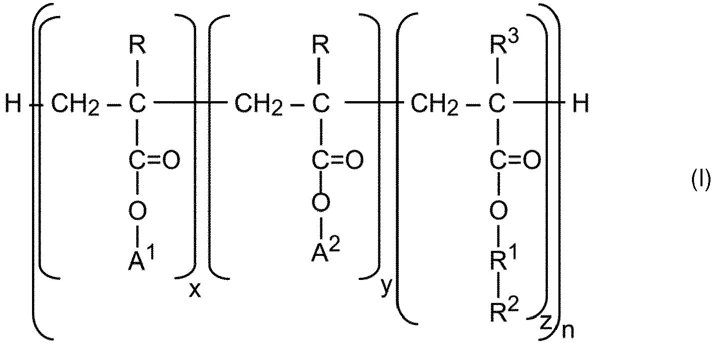

In another embodiment the carbomer according to the present invention is a polymer having the formula (II).

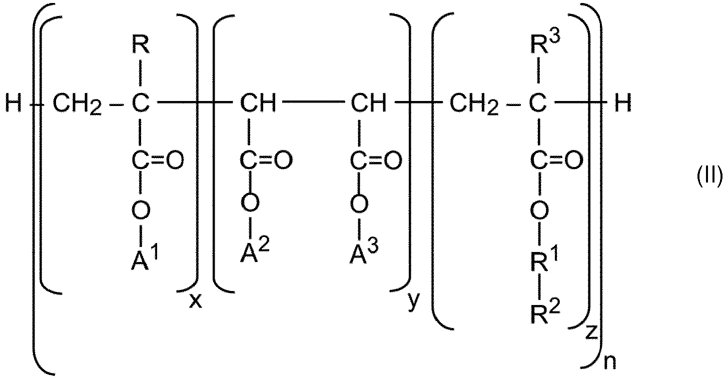

In formulae (I) and (II), z may be 0 or 1; if z is 1, (x + y) : z may be from 4 : 1 to 1,000 : 1, preferably from 6 : 1 to 250 : 1; in which the monomer units may be in random order, y preferably being from 0 up to a maximum equal to the value of x; n is at least 1; and further
R has the meaning specified herein before;
R¹ represents from 1 to 50 independently selected alkyleneoxy groups preferably ethylene oxide and/or propylene oxide groups;
R² represents a C4-C35 hydrocarbon group; preferably saturated alkyl but possibly containing a phenyl group, in which case we prefer R² to represent an octyl phenol, a nonyl phenyl or a dodecyl phenyl group;
R³ represents hydrogen or C1-C4 alkyl, preferably H or CH₃;
A¹, A² and A³ are independently selected from hydrogen and alkyl groups, preferably C1-C4 alkyl groups.

In the formulae (I) and (II), any of the groups -O-A1, -O-A2 or -O-A3 may also be replaced by an amine group, typically having the formula -NL₂, whereby L has the meaning as specified herein before.

For the production of the carbomer, any suitable polymerization technique may be employed. We prefer to use a free-radical polymerization technique such as those known in the art, e.g. such as being disclosed in Kirk-Othmer, 5th Edition, Wiley, in volume 20.

In an embodiment of the present invention, the carbomer has an average molecular weight Mn in the range of 20,000 to 5,000,000, preferably 35,000 to 3,000,000, more preferably 50,000 to 2,000,000, even more preferably 70,000 to 1,000,000, yet more preferably 80,000 to 500,000, even more preferably 90,000 to 200,000 and most preferably at most 130,000, as measured by GPC. The carbomer is preferably cross-linked. The molecular weight is preferably determined by Gel Permeation Chromatography (GPC) with the carbomer dissolved in dimethylacetamide (DMA) and on an analytical system which is calibrated with polymethylmethacrylate reference standards. More preferably the carbomer analysed as such also has, always relative to DMA, an Mw in the range of 50,000 to 5,000,000, preferably 100,000 to 3,000,000, more preferably 130,000 to 2,000,000, and even more preferably 150,000 to 200,000. The polydispersity of the copolymer is preferably in the range of 1-5, more preferably from 1.1 to 4.0, even more preferably from 1.2 to 3.0, yet more preferably from 1.3 to 2.0, even more preferably from 1.4 to 1.7 and even more preferably at most 1.7, determined by the same method.

The effects related to the presence of the carbomer are particularly pronounced with a carbomer which comprises an acrylic acid homopolymer, in particular an α,β unsaturated monobasic acrylic acid having 3-5 carbon atoms, which corresponds to the formula (III):

CH₂=CR-COOH (III)

in which R represents a substituent selected from the group of H, monovalent alkyl, aryl or alkylaryl residues and monovalent cycloalkyl residues, though H as the substituent has the preference. Nevertheless, R may also be selected from the group of alkyl, preferably methyl, alkoxy, haloalkyl, cyanoalkyl and similar groups having 1 to 9 carbon atoms.

Homopolymers of acrylic acid and methacrylic acid have the preference, because they are readily commercially obtainable at an economically acceptable price and because they cause the desired change of viscosity.

The carbomer preferably contributes a pseudo-plastic viscosity behaviour to the composition it is part of. This means that the composition has a high viscosity under low shear force conditions and a low viscosity under high shear force conditions. A preferred viscosity ratio between a first situation whereby no pressure or shear forces are applied to the compositions according to the present invention and a second situation whereby the compositions are subjected to pressure or shear forces, is obtained with an additive wherein the homopolymers are cross-linked with a cross-linking agent which is a polyfunctional monomer having at least two terminal vinyl CH₂=C groups, and with a molecular weight as indicated above, or also between 0.05-100, preferably between 0.5-10, more preferably between 1-5 x 10 exp 9 Dalton, the additive having the property that at high shear forces the viscosity reduces, and the viscosity increasing immediately when the shear forces are removed.

Preferably use is made of a cross-linking agent which is a polyalkenyl polyether, in particular allyl pentaerithritol. Other suitable cross-linking agents are polyfunctional monomers having at least two terminal vinyl CH₂=C groups, such as for instance in butadiene, isoprene, divinyl benzene, divinyl naphthalene, allyl acrylates, and the like. Preferred cross-linking agents are those which contain an alkenyl group wherein an olefinic double bound is connected to a terminal methylene group. Cross linking agents which are particularly preferred are polyethers having on average two or more alkenyl ether groups per molecule. Other suitable cross-linking agents comprise dially esters, dimethylallyl ethers, allyl or methallyl acrylates, acrylamides. Examples thereof are allyl pentaerythritol, allyl saccharose, trimethylolpropane triacrylate, 1,6-hexanediol diacrylate, trimethylolpropane propane diallylether, pentaerythritol triacrylate and the like.

The above cited effects were also observed with an additive which comprises a copolymer, whereby the acrylic acid of the formula (III) is copolymerized with at least one alkylacrylate having formula (IV):

CH₂=CR'-CO-OR" (IV)

whereby R' is selected from the group consisting of H, methyl, ethyl and R" is a C10-C30 alkyl group, preferably a C10-C20 group, the copolymers preferably being cross-linked with a cross-linking agent which is a polyfunctional monomer having at least two terminal vinyl CH₂=C groups, as described above.

Representative acrylates of formula IV are methyl acrylate, ethyl acrylate, propyl acrylate, butyl acrylate, methyl methacrylate, methyl ethacrylate, octyl acrylate, lauryl acrylate, stearyl acrylate, behenyl acrylate, and the corresponding methacrylates. Suitable copolymers comprise copolymers of a mixture of two or more of the listed compounds with acrylic acid of formula (III). Other comonomers comprise acrylonitriles, olefinic unsaturated nitriles, preferably those having 3-10 carbon atoms, for example acrylonitrile and methacrylonitrile; mono-olefinically unsaturated acrylamides, such as acrylamide en methacrylamide, N-alkylolamides of α,β-olefinically unsaturated carboxylica acids, including those having 4-10 carbon atoms, preferably N-methylol-methacrylamide.

Suitable commercially available products for use as the carbomer in the context of the present invention are available from Sigma Chemical Company, such as the products which are offered under the tradename Polygel^{®}, e.g. Polygel^{®} CB 3V, from Rohm & Haas, e.g. the products offered under the tradename Acusol^{®}, from Noveon or Lubrizol, for example products offered under de trademarks Pemulen^{™} and/or Carbopol^{®}, such as Carbopol 674 or 981, Carbopol ETD 2050, or Novethix^{®} L-10, from Wako Pure Chemical Industries in Japan, or from Allied Colloids from Great-Britain, such as Salcare^{®}, or the products offered under the trademark Flosperse^{™} by SNF Floerger. The carbomer may be obtained as a solid powder, such as Carbopol 674 or Polygel CB-3V, but may also be obtained as liquid dispersions, such as Polygel W400 or W301 Polygel or Polygel DR, or as Floset^{™} TH 505 from the company SNF SAS (FR). The liquid forms are easier to process, because they do not require high shear mixing, which is strongly preferred for the dissolving of a powder carbomer. Novethix L-10 is discussed in great detail in WO 2010/103050.

In an embodiment of the present invention, the carbomer comprises a homopolymer of an α,β unsaturated monobasic acrylic acid having 3-5 carbon atoms, which corresponds to the formula (III), in which R represents a substituent selected from the group of H, monovalent alkyl, aryl or alkylaryl residues and monovalent cycloalkyl residues, alkoxy, haloalkyl, cyanoalkyl having 1 to 9 carbon atoms, the homopolymers preferably being cross-linked with a cross-linking agent which preferably is a monomer having at least two terminal vinyl CH₂=C groups.

In another embodiment of the present invention the carbomer comprises a copolymer of
(i) an α,β-unsaturated monobasic acrylic acid, which corresponds to the formula (III) with 3-5 carbon atoms:

   CH₂=CR-COOH (III)

   whereby R is a substituent selected from the group consisting of H, monovalent alkyl, aryl, alkylaryl residues, monovalent cyclo-alkyl residues, alkoxy, haloalkyl, cyanoalkyl residues having 1 to 9 carbon atoms, with
(ii) at least one alkyl acrylate represented by formula (IV)

   CH₂=CR'-CO-OR" (IV)

   whereby R' is selected from the group of H, methyl, ethyl and whereby R" is a C10-C30 alkyl group,
   the copolymers preferably being cross-linked with a cross linking agent which preferably is a polyfunctional monomer having at least two terminal vinyl CH₂=C groups.

In this embodiment, R" in formula (IV) is preferably a C₁₀-C₂₀ alkyl group.

In another embodiment of the present invention, the carbomer has an average molecular weight Mn in the range of 20,000 to 5,000,000, as measured by Gel Permeation Chromatography (GPC).

By preference, the carbomer according to the present invention is itself crosslinked, and preferably the crosslinking agent of the carbomer is allylpentaerythritol.

In yet another embodiment, the carbomer in the composition according to the present invention is itself a pseudo-plastic material.

The term "silicate" covers the family of salts of silicic acid or silica (SiO₂). Because of their specific properties, the present invention is directed to the metasilicate salts of alkali metals and/or earth alkali metals (M^{I}₂SiO₃ and M^{II}SiO₃). These materials may also be referred to by the terms "liquid glass", "water glass" or "waterglass". Sodium metasilicate (Na₂SiO₃) is the most known family member, as compared to sodium orthosilicate (Na₄SiO₄), sodium pyrosilicate (Na₆Si₂O₇), and others.

Because of their most typical production method, these compounds may be described as a combination of silica (SiO₂) and a metal oxide (MeO). In the context of the present invention the metal oxide is typically disodium oxide (Na₂O) or dipotassium oxide (K₂O) or dilithium oxide (Li₂O). Many of these materials are available in aqueous solution and in solid form. The molar ratio of (SiO₂) relative to the metal oxide (MeO) may vary, typically in the range of 2.1:1 to 3.87:1, preferably in the range of 3.2 to 3.4. These products may also be described as a single formula, such as (Na₂O)m(SiO₂)n or (K₂O)m(SiO₂)n, wherein the ratio between the two oxides (n/m) may vary as described. Grades having this molar ratio below 2.94:1 are termed alkaline, and those with a higher SiO₂/Me₂O are described as neutral. Weight ratio's for sodium silicate may be converted to molar ratios by multiplication with 1.032. This conversion factor changes with the metal in the formula.

The silicate may be anhydrous, but preferably is in a hydrated form, in which it may be represented with a formula equal or similar to Me₂SiO₃.nH₂O. In this formula, the n often represents 5, 6, 8 or 9. These forms may contain the discrete, approximately tetrahedral anion SiO₂(OH)₂²⁻ with water of hydration. Very common, and preferred in the context of the present invention, is the pentahydrate, with n=5, which may be formulated as Na₂SiO₂(OH)₂.4H₂O.

A very suitable metasilicate in the context of the present invention is sodium metasilicate, Na₂SiO₃. A metasilicate is a form containing the oxyanion of silicon of SiO₃²⁻.

In an embodiment of the present invention, the metasilicate comprised in the additive composition and/or in the adhesive composition has a molar ratio of silica (SiO₂) to metal oxide (MeₓO), in which x may equal 1 or 2, in the range of 2.17:1 to 3.87:1, preferably in the range of 2.94:1 to 3.87:1, more preferably at least 3.1:1, even more preferably at least 3.2:1 and optionally at most 3.8:1, preferably at most 3.7:1, more preferably at most 3.5:1, even more preferably at most 3.4:1.

In an embodiment, the silicate has a molar ratio of silica (SiO₂) to metal oxide (MeₓO) of at most 2.94:1, meaning that when the metal is sodium, the weight ratio of SiO₂ over Na₂O being at most 2.85:1. The applicants have found that this brings the advantage that the silicate is alkaline, and that this alkaline silicate in a starch based adhesive composition brings the advantage that the gelation point of the starch is reduced. This brings the advantage of the adhesive composition requiring lower temperatures for the gelation to occur, which reduces the energy requirements of the corrugating process and/or allows to operate at higher processing speeds while avoiding or reducing the need for additional boron and/or strong base in the adhesive composition.

The silicate in the additive composition and/or in the adhesive composition is a metasilicate. This brings the advantage that the silicate is readily soluble in water, which simplifies the incorporation of the silicate into an aqueous solution. The metasilicate also has a higher reactivity, such that the beneficial technical effects of the silicate are more pronounced. Preferably the silicate in the additive composition and/or the adhesive composition according to the present invention is at least 90% pure metasilicate, comprising at most 10%wt of polymeric forms of silicate.

In an embodiment of the present invention, the alkali metal silicate in the additive and/or the adhesive composition is selected from the group consisting of sodium metasilicate, potassium metasilicate and lithium metasilicate. The applicants have found that the silicates of alkali metals are more reactive than the silicates of earth alkali metals. This brings the advantage that the beneficial technical effects of the silicate are more pronounced. The applicants have also found that the alkali metal silicates have a lower tendency than earth alkali metal silicates for causing premature cross-linking of the starch in a starch based adhesive composition, which brings the advantage that the rheology of the adhesive composition with the alkali metal silicate is more stable than with the earth alkali metal silicate. The preferred alkali metal metasilicate is sodium metasilicate because it is more abundantly available from a higher number of sources, hence at more attractive economic conditions.

In an embodiment of the present invention, the carbomer in the additive composition and/or the adhesive composition is a water soluble polymer which is derived from an unsaturated acid, preferably from acrylic acid or methacrylic acid or a mixture thereof, and whereby the polymer is preferably cross-linked. The applicants have found that this type of carbomer is highly effective in reducing the formation of the 3-dimensional structure of polymerized silicate. The applicants have further found that this type of carbomer also brings the advantage of increasing the viscosity of the composition it is part of when it is in a liquid form. This is particularly advantageous for the adhesive composition when it is an aqueous liquid, because the higher viscosity, particularly when the composition is at rest, increases the stability of the suspension of the adhesive compound in the adhesive composition, in particular when the adhesive compound is starch. This stability improvement is also important when other solids are part of the composition, such as when the adhesive composition comprises a boron compound which is not fully dissolved in the composition.

The applicants submit that the carbomer is cross-linked. This brings the advantage that any aqueous composition containing the cross-linked carbomer exhibits pseudo-plastic rheology behaviour. This brings the advantage that the aqueous composition may readily be pumped, whereby the pumps require only a low energy input, while the aqueous composition, which is often a suspension, has a high stability at rest. This rheology behaviour brings a distinct difference in behaviour of the adhesive between where it is applied to the applicator roll by means of a knife or a doctor roll and where it is applied to the tips of the corrugations, as compared to where the corrugations separate from the applicator roll, and thus where the occurrence of spinning and other undesired phenomena may be minimized or avoided. Thanks to the cross-linking of the carbomer, an adhesive may be prepared which, compared to conventional Stein-Hall adhesives, has a lower viscosity at high shear, and thus allows operating at higher line speeds, while less adhesive has to be applied because undesirable effects at low shear conditions, primarily where the corrugations separate from the applicator roll, such as spinning and "wicking", are avoided.

In an embodiment of the present invention, the weight ratio of the presence of carbomer over silicate is in the range of higher than 0.50 and at most 2.50.

Preferably the weight ratio of the presence of carbomer over metasilicate is in the range of 0.55 to 2.50, preferably at least 0.60, more preferably at least 0.65. even more preferably at least 0.70, preferably at least 0.75, more preferably at least 0.80, even more preferably at least 0.85, preferably at least 0.90, more preferably at least 0.95, even more preferably at least 1.00, preferably at least 1.05, more preferably at least 1.10, even more preferably at least 1.15, preferably at least 1.20, more preferably at least 1.25, even more preferably at least 1.30, preferably at least 1.35, more preferably at least 1.40, even more preferably at least 1.45, preferably at least 1.50, more preferably at least 1.55, even more preferably at least 1.60. Optionally the weight ratio of the presence of carbomer over silicate is preferably at most 2.25, more preferably at most 2.00, preferably at most 1.90, more preferably at most 1.80. even more preferably at most 1.75, preferably at most 1.70, more preferably at most 1.65, even more preferably at most 1.60, preferably at most 1.50, more preferably at most 1.40, even more preferably at most 1.30, preferably at most 1.20, more preferably at most 1.00, even more preferably at most 0.80, preferably at most 0.70, more preferably at most 0.60, even more preferably at most 0.55.

The applicants have found that the compliance with this ratio condition brings the advantage that the effect of impairing and/or avoiding the formation of the 3-dimensional structure of polymerized silicate is more pronounced, while the performance improvement of the silicate on the adhesive bond formed by the adhesive composition is not affected.

In an embodiment of the present invention, the carbomer is in a form selected from a powder, a gel, and a solution.

In an embodiment of the present invention, the metasilicate is in a form selected from a powder, a crystal, a gel, and a solution.

In an embodiment of the present invention, the carbomer and the metasilicate are both in the form of a powder or granulate.

In an embodiment of the present invention, the additive composition is an aqueous composition or a dry powder mixture. The applicants prefer the additive composition to be a dry powder mixture. The applicants have found that all the essential ingredients of the additive composition, and also most of its optional ingredients, are obtainable in a solid form, usually a powder and occasionally a granulate form, i.e. forms that are suitable for ready dry mixing and obtaining a dry powder mixture product.

In an embodiment of the present invention, the mixture of the carbomer and the silicate is a dry powder mixture, preferably the adhesive composition being in the form of a dry powder mixture.

In an embodiment of the present invention, the mixture of the carbomer and the metasilicate is a dry powder mixture, preferably the additive composition being in the form of a dry powder mixture.

The applicants have found that the additive composition in the form of a dry powder mixture avoids any problems of possible interaction between the carbomer and the silicate at high concentrations in a solution, which may potentially occur when the additive composition would be an aqueous composition comprising the carbomer and the silicate in high concentrations. The applicants have further found that the additive as a dry powder mixture may readily be mixed with a powder adhesive component, such as pearl starch. The mix with the powder adhesive component may offer a dry mix that only needs to be simply mixed into a suitable amount of water in order to obtain an adhesive composition that is suitable for direct application, such as in a corrugator. Such a mix thus needs very little further processing in order to obtain a suitable adhesive composition for the ready use according to the present invention. The dry mix with adhesive component may also be prepared with a lesser amount of powder adhesive to form an intermediate dry powder that is a concentrated form of the additive relative to what is desired in the ultimate adhesive composition. This intermediate brings the advantageous capability that it is readily mixable into a suitable amount of water, thereby forming a liquid intermediate which avoids the possible compatibility problems, but which is easy to dose into the glue formulations that are prepared in the "Glue kitchen" of a particular corrugator plant.

The solid dry premix form of the additive composition and/or adhesive composition according to the present invention may also further comprise any of the further ingredients specified above for the adhesive composition according to the present invention.

In addition, the solid dry premix according to the present invention further comprises an anti-caking agent, bringing the advantage of maintaining the premix as a free flowing solid mixture. Suitable anti-caking agents are well known in the art. We prefer to use silica, such as Wacker HDK H15, Evonik Industries Aerosil^{®}, or Orasil^{®} m130.

In an embodiment of the present invention, the carbomer is present in the additive composition in a concentration of at least 5 ppm weight, preferably at least 50 ppm by weight, more preferably at least 500 ppm by weight, even more preferably at least 750 ppm by weight, yet more preferably at least 900 ppm by weight, more preferably at least 0.1%wt, preferably at least 0.2%wt, more preferably at least 0.5%wt, even more preferably at least 1.0%wt, preferably at least 2.0%wt, more preferably at least 3%wt, even more preferably at least 4%wt, preferably at least 5%wt, more preferably at least 10%wt, even more preferably at least 15%wt, preferably at least 20%wt, more preferably at least 25%wt, and optionally at most 35%wt, preferably at most 30%wt, more preferably at most 25%wt, even more preferably at most 20%wt, preferably at most 15%wt, more preferably at most 10%wt, even more preferably at most 8%wt, preferably at most 5.0%wt, more preferably at most 4.0%wt, whereby the concentration is expressed relative to the total weight of the additive composition, excluding any compound that may be in suspension if the additive is a liquid.

In an embodiment of the present invention, whereby the additive composition is in any one of the prescribed forms excluding the dry powder mixture, the additive composition comprises the metasilicate in a concentration in the range of at least 0.01%wt, preferably at least 0.05%wt, more preferably at least 0.10%wt, preferably at least 0.2%wt, more preferably at least 0.5%wt, even more preferably at least 1.0%wt, preferably at least 2.0%wt, more preferably at least 3%wt, even more preferably at least 4%wt, preferably at least 5%wt, more preferably at least 10%wt, even more preferably at least 15%wt, preferably at least 20%wt, more preferably at least 25%wt, even more preferably at least 30%wt, preferably at least 40%wt, more preferably at least 50%wt, even more preferably at least 60%wt, and optionally at most 75%wt, preferably at most 70%wt, more preferably at most 60%wt, even more preferably at most 50%wt, preferably at most 40%wt, more preferably at most 30%wt, even more preferably at most 25%wt, preferably at most 20%wt, more preferably at most 15%wt.

In the embodiment wherein the additive composition is in the form of a dry powder mixture, the additive composition comprises the metasilicate in a concentration in the range of at least 1.75%wt, preferably at least 1.80%wt, more preferably at least 2.00%wt, preferably at least 3.0%wt, more preferably at least 4.0%wt, preferably at least 5.0%wt, more preferably at least 10%wt, even more preferably at least 15%wt, preferably at least 20%wt, more preferably at least 25%wt, even more preferably at least 30%wt, preferably at least 40%wt, more preferably at least 50%wt, even more preferably at least 60%wt.

In another embodiment wherein the additive composition is in the form of a dry powder mixture, the additive composition comprises the metasilicate in a concentration in the range of at most 75%wt, preferably at most 70%wt, more preferably at most 65%wt, preferably most 60%wt, more preferably at most 55%wt, preferably at most 50%wt, more preferably at most 45%wt, even more preferably at most 40.0%wt, preferably at most 35.0%wt, more preferably at most 30.0%wt, even more preferably at most 25.0%wt, preferably at most 20.0%wt, more preferably at most 15.0%wt, even more preferably at most 10.0%wt.

The applicants have found that prescribed concentrations of the carbomer and/or the silicate provide an additive composition that is highly suitable for its use as additive for an adhesive composition in the production of corrugated cardboard.

In an embodiment of the present invention, the concentration ranges specified above for the metasilicate concentration in the additive composition being in the form of a dry powder mixture also apply for the additive composition and/or the adhesive composition being in any listed form other than the dry powder mixture.

In an embodiment of the present invention, the additive composition and/or the adhesive composition is aqueous and has a pH of at most 13.0, preferably at most 12.5, more preferably at most 12.0, yet more preferably at most 11.5, more preferably at most 11.0, even more preferably at most 10.5, yet more preferably at most 10.0, even more preferably at most 9.5, yet more preferably at most 9.0 or even better at most 8.5, even more preferably at most 8.0, and most preferably at most 7.5, and optionally a pH of at least 4, preferably at least 5, more preferably at least 6.0, even more preferably at least 6.5 and most preferably at least 6.8. It is important to remember that pH is a logarithmic scale, such that a single unit reduction in pH, such as from 12.5 to 11.5, represents a factor 10 reduction in base concentration, and thus a tenfold reduction in the caustic soda concentration.

The applicants have found that the carbomer itself may affect and reduce the gel point of starch and or dextrin, such that less base may be required to obtain a desired gel point reduction. This brings the advantage that less or no base may be added to the adhesive composition, and/or to the additive composition. This advantage may be used up to the preferred point where base is only used to compensate for any acidity which may have been introduced by the carbomer and/or the silicate, and the adhesive composition, and optionally also the additive composition, ends up having a pH in any of the narrower ranges specified above, preferably in the range of 6.8 to 7.2. This brings the advantage that an adhesive may be provided which contains substantially no free caustic soda, and which may thus be used without any of the toxicity and/or health concerns associated with the presence of free caustic soda.

In an embodiment of the present invention, the additive composition and/or the adhesive composition further comprises a boron containing compound or a zirconium and/or hafnium and/or aluminium containing compound as a boron alternative. The applicants have found that a zirconium and/or hafnium and/or aluminium containing compound may be suitable as an alternative for the boron containing compound which is so often used in the type of adhesives described in this document, and may perform a similar function as the boron containing compound without causing the concerns that are associated with the use of boron.

Preferably the boron-containing compound is selected from the group consisting of boric acid, a sodium or potassium polyborate, in its hydrated or unhydrated form, boric anhydride, sodium or potassium metaborate, preferably a sodium tetraborate, pentaborate or octaborate, more preferably sodium tetraborate decahydrate (borax), amino borate, and mixtures thereof, more preferably an amino borate.

The applicants have found that a boron compound, if its presence is considered acceptable, or its zirconium, hafnium and/or aluminium containing alternative, brings the advantage of a viscosity effect by reaction with the starch, a gel point reduction effect, and may also have a plasticising effect. The boron containing compound or its alternative may be mixed as a dry ingredient with the carbomer and/or the silicate such that it becomes part of the additive composition as a dry powder mix or premix. The applicants have further found that the boron containing compound or its alternative increases the tack of the adhesive composition, and also stabilizes the swelling of the starch and/or dextrin adhesive compound, possibly but not necessarily induced by the presence of a strong base.

The inventors have found that it advantageous to use the boron containing compound or its alternative as a granulate, as compared to the use of the same compound as a powder. The inventors have found that the granulate is easier to work with, and generates less dust in the workshop. This allows to keep the workshop cleaner and makes the provisions simpler for assuring a good industrial hygiene for the operations personnel. The granulate particles also are found to wet more readily, such that the granulate more readily comes into suspension.

The inventors preferably use a form of granulate having a particle size distribution which by sieving shows at most 20.00 %wt of particles passing through a sieve with openings of 0.063 mm, more preferably at most 10.00% wt, even more preferably at most 6.00% wt and preferably at most 4.00% wt. Additionally by preference at most 10.00% wt is retained in a sieve with openings of 1.000 mm, preferably at most 6.00% wt, more preferably at most 4.00% wt, typically even at most 2.00% wt and if desired not more than 1.00% wt. Preferably as alternative may be chosen a granulate with a sieve specification that only at most 0.1% wt is retained with a US Standard sieve No 8 (2.38 mm sieve opening), more preferably in addition at most 2.0% wt with a US Standard sieve No 20 (0.841 mm sieve opening).

Commercially available and suitable boron containing compounds are for instance obtainable from Etimine SA, a subsidiary of Eti Mine, also known as Eti Mine Works, a Turkish company, for example under the trademark ENTIMADEN^{®}, and from Borax Company, a subsidiary of Rio Tinto, an international group with decision centres in Great Britain and in Australia. Borax Company may use for boric acid the trademark Optibor^{®} and offers boron containing compounds with the additional annotation SQ, for instance boric acid but also potassium tetraborate, which are particularly intended for the nuclear industry. In this application, the inventors prefer to use a larger granulate, such as the one according to the specification using the US Standard sieve No. 8, but which contains lower quantities of particular impurities, such as for instance at most 3.0 ppm SO₄ and/or at most 0.4 ppm CI, and/or at most 2.0 ppm Fe, always expressed on a weight basis, and in particular applicable to boric acid. Other granulates of boron containing compounds may comprise, if desired, at most 500 ppm SO₄, preferably at most 350 ppm SO₄, more preferably at most 70 ppm SO₄, at most 50 ppm CI, preferably at most 18 ppm CI, more preferably at most 10 ppm CI, and/or at most 10 ppm Fe, preferably at most 7 ppm Fe and more preferably at most 6 ppm Fe, always expressed on a weight basis.

Suitable zirconium and/or hafnium containing compounds as alternative for a boron containing compound are described in EP 3272825 A1 and US 2017/0114501 A1. Suitable are e.g. basic zirconium and/or hafnium salts. Prefered are the zirconium carbonates, in particular sodium zirconium carbonate, potassium zirconium carbonate (KZC) and ammonium zirconium carbonate (AZC), and mixtures thereof, more preferably AZC. Suitable methods for employing these compounds in these compositions are described in these documents.

The boron containing compound or its alternative is even more preferably introduced as a liquid. Suitable forms of amino borates are e.g. the Diglycolamine^{®} or DGA^{®} Agent Borates offered by the company Huntsman. A highly suitable liquid form of boron is an aqueous solution of amine borates. A suitable form of amine borates is obtainable as Performax^{®} CB6810 from the company Lubrizol, in which a rheology modifier system is incorporated.

In an embodiment of the present invention, the additive composition and/or the adhesive composition further comprises an additional dispersant which is selected from the group consisting of carboxymethyl cellulose (CMC), cellulose gum, gum arabic and xanthan gum. This compound may act as an additional dispersant, over and above the effect of the carbomer, and contribute by further modifying the viscosity and/or thicken the composition when the composition is, or is converted into, the form of an aqueous composition. We have found that CMC may be used in combination with the carbomer, and that an additive and/or an adhesive composition according to the present invention containing CMC preferably has a pH of at most 10.0, more preferably at most 9.0, in order to avoid a degradation of the CMC by a strong base such as NaOH.

In an embodiment of the present invention, the additive and/or the adhesive composition further comprises at least one ingredient selected from the group consisting of a surface tension agent, an antifoam agent, a corrosion inhibitor, a descaling agent, an optical clarification agent, a fungicide, a bactericide, a colorant, a wetting agent, a viscosity modifier, a rheology modifier, an antifreeze, a solvent, a filler, and mixtures thereof. These ingredients may be introduced at any point in the process of the present invention, and in any of the intermediate compositions as described, e.g. as part of the additive according to the present invention.

The addition of a surface tension agent, such as a surfactant, brings the advantage of a better and faster penetration of the adhesive into the paper or cardboard, and thus allows running the process at higher line speeds. The surfactants may be anionic, cationic, non-ionic or zwitterionic. We prefer to use a surfactant which is pH neutral or even slightly acidic. We prefer that the surfactant is a kind which causes low foam formation. We prefer to use a liquid soap. Several suitable types are known in the industry, too many to be listed.

Suitable anti-freeze agents are also well known in the art. They prevent that the adhesive lines may block up by ice formation during winter and/or in cold locations. We prefer to use propylene glycol and/or ethylene glycol, such as those obtainable from Dow Chemical. Descaling agents are also known in the art. They bring the advantage of preventing or reducing the sedimentation of calcium-based sediments inside the adhesive equipment. We prefer to use Baypure^{®} DS100 obtainable from Lanxess.

Many suitable anti-bacterial agents are known in the industry, and are too many to be listed.

The solid dry premix provided by the present invention may also further comprise any of the further ingredients specified above for the adhesive composition according to the present invention.

Plasticizers are widely used into adhesive compositions to control brittleness of the glue line and to regulate the speed of drying. Common plasticizers include glycerin, glycols, sorbitol, glucose, and sugar. These types of plasticizers act as a hygroscopic agent to decrease the drying rate of the film. Plasticizers based on saps, polyglycols, and sulfonated oil derivates lubricate the layers within the dried adhesive and, thus, impart flexibility. Urea, sodium nitrate, salicylic acid, and formaldehyde plasticize by forming a solid solution with the dried adhesive.

Chemicals such as calcium chloride, urea, sodium nitrate, thiourea, guanidine salts, etc. are used as liquefiers to reduce viscosity or as humectants to control open time and speed of drying. They are usually added at about 5-20% based on dry starch or dextrin. Colloid stabilizers such as soaps and sodium chloride are sometimes used to retard the tendency to retrogradation.

In addition, the solid dry premix according to the present invention further comprises an anti-caking agent, bringing the advantage of maintaining the premix as a free flowing solid mixture. Suitable anti-caking agents are well known in the art. We prefer to use silica, such as Wacker HDK H15, Evonik Industries Aerosil^{®}, or Orasil^{®} m130.

In special applications, the adhesive is preferably water-resistant, a property which is typically obtained by the addition of particular resin, such as a polyvinyl alcohol (PVA). With starch and/or dextrin based adhesive compositions, typically these resins react with hydroxyl groups on the starch and/or dextrin and render the starch or dextrin insoluble in water. These resins may also be of the aldehyde type, such as aminoplasts, for instance ketone/formaldehyde, ureum/formaldehyde, melamine/formaldehyde, phenol/formaldehyde resins, or equivalents. A problem is that some of these resins may react with borax in the formula, which may change the viscosity of the adhesive.

Superior water resistance may be obtained, also in combination with starch, by using PVA in a ratio of 1/20 to 1 (weight ratio) relative to starch, preferably in a ratio from 1/20 to 1/7. The definition of PVA includes perfectly saponified PVA and/or PVA aqueous derivatives, for example, the partially or strongly acetated derivative forms of PVA. The higher the polymerization degree of these polymers is, the more effective the polymers are.

Mineral fillers such as kaolin clay, calcium carbonate, titanium dioxide, etc. are often used in starch and dextrin adhesives at concentrations of 5-50%. These are used to reduce cost and control penetration into porous substrates. Thixotropic agents such as bentonite are also often used in certain applications to control viscosity.

Other additives which are found in starch and dextrin based adhesive include preservatives, bleaches, and defoamers. Commonly used preservatives used to prevent microbial activity include formaldehyde (35% solids) at 0.2-1.0%, copper sulfate at about 0.2%, zinc sulfate, benzoates, fluorides, and phenols. Possible toxic effects must be carefully considered before choosing a preservative. Common bleaching agents include sodium bisulfite, hydrogen and sodium peroxide, and sodium perborate. Organic solvents are sometimes added to improve the adhesion to waxed surfaces.

The adhesive composition according to the present invention may further contain an optical clarification agent, to allow controlling the quality of the adhesive composition using UV irradiation. The optical clarification agent may also be a fluorescing agent, possibly a blue but preferably a yellow-green UV light fluorescing agent, which allows to detect, under specific wavelength of UV light, the presence of the adhesive composition and to ensure that the adhesive is where it should be no matter what kind of material was used to create the article. This enables producers of e.g. cardboard and packaging to use equipment with integrated sensors and camera detection mechanisms to track and adjust adhesive application in real time. The fluorescing agent and the adhesive composition it contains may be made compliant with food safety requirements. The yellow-green UV light fluorescing agents are preferred because these remain readily detectable in presence of high levels of optical brighteners, unlike their blue UV counterparts.

In an embodiment of the present invention, the additive composition and/or the adhesive composition further comprises a surfactant, preferably a non-ionic surfactant, more preferably a fatty alcohol derivative, more preferably the fatty alcohol having a hydrocarbon chain length in the range of 10-24, preferably the derivative being an alkoxylate having an average degree of alkoxylation in the range of 3-20, preferably the alkoxylate being an ethoxylate or a propoxylate, and more preferably the surfactant being a phosphate ester of the fatty alcohol ethoxylate. The applicants have found that a surfactant as prescribed brings the advantage that the additive and/or the adhesive composition, but in particular the additive, may reach the status of a homogeneous aqueous composition.

In an embodiment of the present invention, the additive composition and/or the adhesive composition further comprises a strong base, preferably NaOH or KOH, more preferably KOH. The presence of a strong base, if considered acceptable, may bring the advantage of reducing the gelation point of the adhesive compound, e.g. starch or dextrin, which allows to reduce the energy requirements of the process and/or allow to operate at higher processing speeds. The applicants have found that the presence of a base may also contribute in avoiding the precipitation of silicate at an acidic pH. The base may also serve to neutralise any acidity that may have been introduced by or together with another ingredient, such as by or with the carbomer and/or the surfactant, e.g. because of an excess phosphoric acid in the phosphate ester surfactant of the fatty alcohol ethoxylate.

In an embodiment of the present invention, the additive composition and/or the adhesive composition further comprises at least one member of the "urea" class of chemical compounds, e.g. carbamide or urea (CO(NH₂)₂), carbamide peroxide or urea peroxide (CH₆N₂O₃), allantoin or glyoxyldiureide (C₄H₆N₄O₃), and hydantoin or glycolylurea (a heterocyclic compound with the formula CH₂-CO-NH-CO-NH), more preferably carbamide. The applicants have found that the introduction of a member of the "urea" class of chemical compounds, in particular of carbamide or urea itself, brings the advantage of bringing extra cross-linking agent for the adhesive compound, in particular of starch, polyvinyl alcohol and/or dextrin. In the context of the present invention, the "urea" class of chemical compounds includes the entire family of compounds listed in US 5858549.

In an embodiment of the present invention, the additive composition and/or the adhesive composition further comprises a sequestering agent, also called a "chelating agent" or a "complexing agent", i.e. a compound which is able to form a complex with Ca and/or Mg, in an aqueous form of the additive and/or in an aqueous form of the adhesive composition according to the present invention. Preferably the sequestering agent is selected from the group consisting of sodium triphosphate, 1-hydroxyethane 1,1-diphosphonic acid (HEDP), amino-tris(methylenephosphonic acid) (ATMP), ethylenediamine tetra(methylene phosphonic acid) (EDTMP), hexamethylene diamine tetra(methylene phosphonic acid) (HDTMP), diethylenetriamine penta(methylene phosphonic acid) (DTPMP), citric acid, gluconic acid, EDTA and zeolites, more preferably hydroxyethane 1,1-diphosphonic acid (HEDP). This ingredient brings the advantage that it alleviates any problems that may be caused by the presence of heavier and/or higher valency metals in an aqueous solution, most typically by Ca and/or Mg.

In an embodiment of the present invention, the adhesive composition comprises an amount of the additive composition according to the present invention. The applicants have found that the inclusion of an amount of the additive composition is a highly suitable and convenient way to bring the desired technical effects to the adhesive composition.

In an embodiment of the present invention, adhesive composition is in the form of a kit in parts wherein the carbomer and the metasilicate are together in a part of the kit, optionally in a dry powder mixture part. The applicants have found that this is a highly suitable form of providing the ingredients necessary to obtain the effects targeted with the present invention.

In an embodiment of the present invention, the adhesive composition comprises water. Although the adhesive composition may be provided in the form of a dry mix, the form of an aqueous composition, e.g. by mixing the dry mix adhesive composition into a suitable amount of water, is easy to apply onto a substrate and brings the advantage that the adhesive composition may readily start penetrating into the substrate, such that is readily positions itself for establishing the desired adhesive bond.

In an embodiment of the present invention, the adhesive composition comprises the carbomer in a concentration in the range of 5 ppm weight to 6.0%wt, preferably at least 50 ppm by weight, more preferably at least 500 ppm by weight, even more preferably at least 750 ppm by weight, yet more preferably at least 900 ppm by weight, more preferably at least 0.1%wt, preferably at least 0.2%wt, more preferably at least 0.5%wt, even more preferably at least 1.0%wt, preferably at least 2.0%wt, more preferably at least 3%wt, even more preferably at least 4%wt, preferably at least 5%wt. Optionally the adhesive composition comprises the carbomer in a concentration of at most 5%wt, preferably at most 4%wt, more preferably at most 3%wt, even more preferably at most 2%wt, preferably at most 1.0%wt, more preferably at most 0.75%wt, even more preferably at most 0.50%wt, preferably at most 0.45%wt. The applicants have found that compliance with these concentration limits readily brings the desired technical effects, properties and performance properties to the adhesive composition according to the present invention.

The presence of the carbomer in the composition may be determined by Infra-Red (IR) Spectrometry, and with the development of a suitable calibration curve, this method may be made suitable for a quantitative determination of the amount of carbomer present in the composition. We prefer to use a Perkin Elmer FT-IR Spectrometer Spectrum 100, with a Universal ATR Sampling Accessory

In an embodiment of the present invention, the adhesive composition comprises the metasilicate in a concentration in the range of 0.01%wt to 15%wt. Preferably the adhesive composition according to the present invention comprises the silicate in a concentration of at least preferably at least 0.05%wt or 500 ppmwt, more preferably at least 0.10%wt, preferably at least 0.2%wt, more preferably at least 0.5%wt, even more preferably at least 1.0%wt, and optionally at most 12.5%wt, preferably at most 10.0%wt, more preferably at most 7.5%wt, even more preferably at most 5.0%wt, preferably at most 4.0%wt, more preferably at most 3.0%wt, even more preferably at most 2.5%wt, preferably at most 2.0%wt, more preferably at most 1.5%wt, preferably at most 1.0%wt, more preferably at most 0.90%wt, even more preferably at most 0.80%wt, preferably at most 0.70%wt, more preferably at most 0.60%wt, even more preferably at most 0.50%wt, preferably at most 0.40%wt, more preferably at most 0.35%wt.

The applicants have found that prescribed concentrations of the carbomer and/or the silicate provide an adhesive composition that is highly suitable in the production of corrugated cardboard and brings the desired technical effects, properties and performance properties in accordance with the present invention.

In an embodiment of the present invention, the adhesive composition is an aqueous composition and comprises at least 7%wt and at most 30%wt, based on the total composition, of adhesive component. In an embodiment, the adhesive composition according to the present invention comprises at most 29.5%wt, based on the total adhesive composition, of adhesive components, preferably at most 29.0%wt, more preferably at most 28.5%wt, even more preferably at most 28.0%wt, yet more preferably at most 27.5%wt, more preferably at most 27.0%wt, even more preferably at most 26.5%wt, yet more preferably at most 26.0%wt, more preferably at most 25.5%wt, even more preferably at most 25.0%wt, more preferably at most 24.5%wt and even more preferably at most 24.0%wt. The applicants have found that when the concentration of adhesive components is below these limits, that the adhesive bond which is formed is stronger and more reliable, in particular with the more adsorbent substrates, and this surprising in view of the lower amount of adhesive components in the composition. The applicants believe this advantage is due to an improved compromise between sufficient penetration of the adhesive into the substrate and a sufficiently fast removal of the water from the adhesive bond.

In another embodiment, the adhesive composition according to the present invention comprises at least 8.0%wt, based on the total adhesive composition, of adhesive components, preferably at least 10.0%wt, more preferably at least 11.0%wt, even more preferably at least 12.0%wt, yet more preferably at least 13.0%wt, more preferably at least 14.0%wt, even more preferably at least 15.0%wt, yet more preferably at least 16.0%wt, more preferably at least 17.0%wt, even more preferably at least 18.0%wt, yet more preferably at least 19.0%wt, more preferably at least 20.0%wt, even more preferably at least 21.0%wt, yet more preferably at least 22.0%wt. The applicants have found that when the concentration of adhesive components is above these limits, that the adhesive bond which is formed is also stronger and more reliable, in particular with the more adsorbent substrates. The applicants believe this advantage is due to the higher presence of adhesive components and a reduced presence of water, which also improves the compromise between sufficient but not excessive penetration of the adhesive into the substrate and a sufficiently fast removal of the water from the adhesive bond, which leads to a higher presence of adhesive component at the desired location of the adhesive bond, after removal of the water by evaporation. A higher presence of adhesive component also brings the advantage of a reduced energy requirement of the process because less water needs to be evaporated.

In an embodiment of the present invention, the adhesive composition is an aqueous composition and comprises starch, and more than 91.0%wt of all the starches in the composition are in a cold water insoluble form. It is preferred in the adhesive composition according to the present invention that at least 92.0 % by weight of all the starches in the composition are in a cold water insoluble form, i.e. present as non-gelatinized and/or pearl starch. More preferably at least 93.0%, even more preferably 94.0 %, yet more preferably at least 95.0 %, more preferably at least 96.0 %, even more preferably at least 97.0 %, yet more preferably at least 98.0 %, even more preferably at least 99.0 % and most preferably as much as at least 99.9 % by weight of the starch is present as pearl or ungelatinised starch. In a preferred embodiment without any gelatinized starch, the process step for first preparing a viscous carrier for the adhesive, such as in the Stein-Hall process, may be dispensed with entirely, which brings a significant simplification of the process. We prefer this feature to apply to all adhesive compositions according to the present invention containing starch, thus also to those compositions which are essentially free of any boron. The advantage is that gelatinized starch is highly prone to microbiological growth, developing an unpleasant odour, while pearl starch is not or hardly susceptible for this undesired phenomenon. The higher the proportion of the pearl starch in the composition, relative to the total starch, the higher the bacteriological stability of the composition according to the present invention. We have found that compositions whereby essentially none of the starch is gelatinized are characterised by a very high stability in terms of many of their characteristics, such as viscosity, adhesive power, etc..., including odour. This advantage is particularly beneficial when flour is used as the source of starch.

In an embodiment of the present invention, the adhesive composition contains starch and at least part of the starch is present as flour. The applicants have found that in the adhesive compositions of the present inventions, the starch may also be provided in a less pure form, such as the flour obtained from the dry processing of natural feedstocks, as explained above. Flour is a much cheaper feedstock compared to the starch produced from the wet process. The adhesive compositions may thus be produced from feedstocks that are more readily available and much more economical as compared to the conventional adhesives based on pure starch. In view of the high consumption of adhesive, this advantage is of high importance to the adhesive consumer, such as the corrugated board producer.

The use of flour as the source of starch is particularly suitable with compositions having a pH which is not too strongly alkaline, preferably at most 10.0, more preferably at most 9.0 and even more preferably at most 8.0. Without wanting to be bound by this theory, we believe that any proteins present in flour may react with strong bases, such as NaOH, and hence result in an adhesive composition which may not be suitably stable and/or be vulnerable to bacteriological attack.

In an embodiment of the present invention, the adhesive composition is an aqueous composition and has at least one of the following characteristics:
(i) a gelation point of at most 70°C,
(ii) a refractometer reading in % Brix of at most 15%,
(iii) a Brookfield viscosity at 25°C in the range of 200 to 2000 mPa.s, as measured on a Brookfield RV apparatus with spindle 4 on a speed of 150 rpm for the fresh adhesive composition, and
(iv) a ratio of the viscosity measured as under (iii) at a spindle speed of 1 rpm divided by the viscosity measured at a spindle speed of 150 rpm of at least 5.00.

In an embodiment of the present invention, the adhesive composition has a gelation point of at most 70°C, preferably at most 65°C, more preferably at most 62°C, even more preferably at most 60°C, yet more preferably at most 58°C, and most preferably at most 57°C. The gelation point may preferably be even lower, such as at most 55°C, preferably at most 53°C or even 52°C, and even more preferably at most 52°C. This reduced gel point or gelation point brings the advantage of a lower temperature requirement for achieving the bonding function, which reduces the energy requirements of the application process.

Preferably the adhesive composition of the present invention has a refractometer reading in %Brix of at most 15%, preferably at most 14%, more preferably at most 13%, even more preferably at most 12%. We prefer the refractometer reading to be as low as possible, preferably at most 10%, more preferably at most 7% or even 5%, even more preferably at most 3% or even 1% and most preferably 0%.

In an embodiment, the adhesive composition according to the present invention has a viscosity at 25°C in the range of 200 to 2000 mPa.s or centiPoise (cP), as measured on a Brookfield viscosimeter with spindle 4 and at a spindle speed of 150 rotations per minute (rpm). This viscosity measured at 150 rpm is preferably in the range of 250 to 1500 cP, more preferably in the range 370 to 1250 cP and most preferably in the range 500 to 1000 cP.

Preferably the viscosity of the adhesive composition at a spindle speed of 1 rpm is in the range of 3000 to 60000 mPa.s, more preferably at least 5000 mPa.s, even more preferably at least 10000 mPa.s, yet more preferably at least 12000 mPa.s.

In an embodiment, the viscosity of the adhesive composition according to the present invention increases strongly when the amount of shear stress applied reduces to low values. As such, the ratio of the viscosity of the adhesive composition according to the present invention, as measured on a Brookfield viscosimeter with spindle 4 at 25°C and expressed in mPa.s or cP, and which is measured at a spindle speed of 1 rpm (low shear) divided by the viscosity measured at a spindle speed of 150 rpm (high shear) is preferably at least 5.00, preferably at least 7.0, more preferably at least 10.0, even more preferably at least 12.0 or even 15.0, even more preferably at least 20.0. The higher this ratio, the better the difference in behaviour of the adhesive between where it is applied to the applicator roll by means of a knife or a doctor roll and where it is applied to the tips of the corrugations, as compared to where the corrugations separate from the applicator roll, and thus where the occurrence of spinning and other undesired phenomena may be minimized or avoided. With a high ratio, an adhesive may be prepared which, compared to conventional Stein-Hall adhesives, has a lower viscosity at high shear, and thus allows operating at higher line speeds, while less adhesive has to be applied because undesirable effects at low shear conditions, primarily where the corrugations separate from the applicator roll, such as spinning and "wicking", are avoided.

The applicants have found that the carbomer itself may affect and reduce the gel point of starch and or dextrin, such that less base may be required to obtain a desired gel point reduction. This brings the advantage that less or no base may be added to the composition. This advantage may be used up to the preferred point where base is only used to compensate for any acidity which may have been introduced by the carbomer, and the adhesive composition ends up with a pH in any of the narrower ranges specified above, preferably in the range of 6.8 to 7.2. This brings the advantage that an adhesive may be provided which contains substantially no free caustic soda, and which may thus be used without any of the toxicity and/or health concerns associated with free caustic soda.

We have further found that the carbomer, even in the low concentrations as used in the context of the present invention, brings water resistance to the starch and/or dextrin based adhesive compositions of the present invention, we believe this being caused by a reaction of the carbomer with the starch and/or the dextrin. This brings the advantage that the starch based adhesive composition of the present invention requires less water-resistant resin in order to meet the requirements of a water resistant adhesive, such as for example required by standard NFQ 03.042.

In an embodiment, the adhesive composition according to the present invention is substantially free of boron or a boron-containing compound and/or substantially free of free NaOH. The term "substantially free" in this context means that any presence of these compounds is below a level at which it may raise a concern for the consumer and/or for the legislator. The presence of the particular compound may be determined using the analytical method which was used or prescribed in the context of the particular concern. Suitable analytical methods for measuring boron content and/or free NaOH are well known in the art.

In an embodiment of the present invention, the method of preparing the additive further comprises mixing in at least one of the further ingredients as specified, over and above the carbomer and the metasilicate. The further ingredient may be mixed with at least one of the carbomer and the metasilicate before the latter two are mixed together, or the further ingredient may be mixed into the mixture prepared of the carbomer and the metasilicate.

In an embodiment of the present invention, the mixture of the carbomer and the silicate is a dry powder mixture. The mixing in of the at least one further ingredient may be performed by mixing together the ingredients as dry components, preferably as powder, but some of the ingredients may preferably be introduced as a granulate, e.g. the boron containing compound. Some of the ingredients may be introduced as a liquid, e.g. an aqueous solution, and during the mixing become fully absorbed on the particles of other granulate ingredients, such that the mixing may still result in the form of a dry powder mixture product.

In an embodiment of the present invention, the method of preparing the additive composition and/or the adhesive composition further comprises the step of dissolving the carbomer in water, preferably under high shear conditions. This step may be performed on the carbomer alone and followed by introducing the silicate and other ingredients desired into the ultimate product in a number of subsequent steps. The step of dissolving the carbomer may also be performed on a dry mixture of the carbomer with at least one of the other desired and/or essential ingredients. Mixing the carbomer as a powder into an aqueous solution is preferably performed under high shear conditions, with a high shear mixer. Suitable industrial types of high shear mixers are well known in industry. In the laboratory we preferred to use an IKA magic LAB High Shear Mixer. The carbomer may also be obtained as a liquid dispersion. Mixing the carbomer as a liquid dispersion into another liquid is preferably performed without applying high shear, but with a slow mixer, such that the formation of foam is minimized and the risk for forming a whipped mousse is reduced.

In an embodiment of the present invention, the method of preparing the additive composition and/or the adhesive composition further comprises the step of adding a boron containing compound and/or a suitable alternative, preferably a boron containing compound and/or its alternative as specified elsewhere in this document, more preferably an amino borate.

The boron-containing compound or its alternative may be introduced as a dry component, and may be mixed in to form a dry powder mix as mixture product. The boron-containing compound or its alternative may also be brought into suspension by means of the carbomer according to the present invention. Most suitable is to first prepare a gel containing carbomer in water in a concentration in the range of 0.5-6%wt, preferably 1-5%wt and more preferably 2-4%wt, typically using a high shear mixer. Into 1000 kg of this gel may be suspended a boron-containing compound or its alternative, such as from 100 to 2000 kg of borax, preferably from 400 to 1800 kg of borax, more preferably from 500 to 1500 kg of borax, even more preferably from 550 to 1000 kg of borax. The boron-containing compound or its alternative may be added during simple mixing, or may be added during the preparation of the gel in the high shear mixer. The same procedure may be applied for introducing the silicate, although the silicate may also be introduced as an aqueous solution. The resulting suspension obtained may be suitable as an additive for adding boron or its alternative into a conventional Stein-Hall adhesive or its variants, as well as into the adhesive composition according to the present invention.

In an embodiment of the present invention, the use of the additive composition is for improving the adhesive performance of an adhesive composition comprising at least one of starch, dextrin and polyvinyl alcohol. The main targeted effects for the use of the additive composition according to the present invention in an adhesive composition is for improving the tack of the adhesive, its penetration into the porous substrate, and its water retention, as explained hereinabove.

In an embodiment of the method according to the present invention for preparing the adhesive composition, the mixture of the carbomer and the silicate is a dry powder mixture. The applicants have found that the carbomer and the silicate are preferably in concentrated form mixed together as dry powders, thereby forming a dry powder mixture. This mode of operating was found to avoid any problems of possible interaction between the carbomer and the silicate at high concentrations in a solution, which may potentially occur when the method of preparing the adhesive composition would comprise a step forming an aqueous composition comprising the carbomer and the silicate in high concentrations.

In an embodiment of the present invention, the method for preparing the adhesive composition comprises the step of adding the additive composition according to the present invention. The applicants have found that the additive provides a highly suitable source of many of the ingredients desired in the adhesive composition. Adding in the additive is thus a very convenient way to introduce carbomer and silicate into the adhesive composition, and if desired also a number of other optional ingredients of the adhesive composition.

In an embodiment of the use of the adhesive composition according to the present invention to produce an article comprising the substrate and the adhesive bond, the article is selected from the group consisting of laminated non-corrugated or corrugated paper or card board, cardboard, corrugated cardboard, optionally in the form of a tube or a wound tube, and a container or packaging container comprising cardboard or corrugated cardboard.

The method according to the present invention for producing an article may further comprise the production of laminated corrugated paper or card board, optionally comprising a plurality of super imposed layers of corrugated paper or card connected together by intermittent flat sheets of paper, whereby an amount of the above described adhesive composition is applied to the top of the corrugations, after which the layers are adhered to each other under pressure.

The applicants have found that the adhesive composition according to the present invention reduces the risk for deformation of the substrate, in particular the corrugations of the card/paper board. The applicant believes that this advantage is brought by a decreased penetration ability of the adhesive into the substrate. In his opinion, decreasing adhesive penetration should allow saving on the amount of adhesive applied, thus limiting the amount of water contacting the substrate and in that way limiting the amount of water penetrating the substrate.

The applicant has found that this advantage is obtained by the improved rheology behaviour brought primarily by the carbomer. This brings a reduced viscosity at the time of application, so that a smaller amount and a thinner layer of adhesive may be applied to the corrugations. With a thinner layer applied, the amount of water contacting and penetrating the substrate is reduced, thus reducing energy requirements for evaporating water which during the course of the lamination process penetrates the corrugated paper board. The reduced water penetration also minimises the risk for deformation of the corrugated paper/card as well as of the flat liners. The applicant further found that preferably the viscosity of the adhesive composition after application should be sufficiently high to ensure good adhesion.

The presence of the carbomer allows to meet both requirements of a sufficiently low viscosity at the time of application and a sufficiently high viscosity at the time of effectuating the adhesion, as this brings pseudo plastic properties and is capable of imparting this pseudo plastic behaviour to the adhesive composition containing them, even when present in a low concentration in the adhesive composition only. With the adhesive composition according to the present invention, viscosity changes strongly with the shear forces applied to it. In particular, the adhesive composition of the present invention has the effect that
▪ It shows a reduced viscosity when applied to the corrugated paper/card, so that the amount applied may be minimised.
▪ as soon as the adhesive composition has been applied to the corrugations, an almost instantaneous increase in viscosity takes place which prevents the adhesive from flowing away and ensures good adhesion. The higher viscosity at low shear stress is restored virtually immediately upon removal of the shear forces, as a consequence of which penetration of the adhesive into the card/paper board is minimised. The reduced adhesive penetration reduces water penetration. This has the consequence that energy requirements for evaporating the penetrated water may be minimised, such that a paper/card board with an improved strength may be obtained and that the tendency to lasting of the paper board may be reduced, thus putting the paper board available for further processing after a much shorter drying time. On the other hand, the viscosity is such that sufficient water penetration is ensured to minimise the risk to the formation of cracks in the paper/card board.

The applicant has also observed that the viscosity of the adhesive composition may be reversibly increased and decreased. Thus, any adhesive which has not be transferred from the applicator to the cardboard surface but remained on the applicator, may be recycled and re-used without this adversely affecting the adhesive strength or its viscosity. The applicant has further observed that the adhesive composition shows a better affinity for the card/paper board and provides an improved adhesion as well as improved printability of the surface as compared to prior art adhesive compositions. Conventional prior art adhesive compositions control the viscosity of the adhesive composition by controlling the gelling of the starch in the composition. However, gelling is an irreversible process. Once gelled, the adhesive composition typically cannot be re-used and loses its adhesive properties. With the present invention, the viscosity of the adhesive composition may be controlled independently of the gelling process.

In an embodiment of at least one of the kits in parts according to the present invention, the carbomer in the kit in parts is in a form selected from the group consisting of a powder, a gel, and a solution. The applicants have found that these alternate forms of the carbomer are highly suitable for being part of a kit in parts, because these forms are readily employable for preparing the product for which the kit in parts is intended. The applicants prefer that the carbomer is prepared as a gel and/or as a solution because this brings the advantage to the user of the kit in parts that he does not require a step using high shear mixing to form a gel of the carbomer.

In an embodiment of at least one of the kits in parts according to the present invention, the silicate is in a form selected from the group consisting of a powder, a crystal, a solution, and a gel. The applicants have found that these alternate forms of the silicate are highly convenient and readily employable for preparing the product for which the kit in parts is intended.

In an embodiment of at least one of the kits in parts according to the present invention, the carbomer and the silicate are in the form of dry powder, preferably the carbomer and the silicate being together in a dry powder mixture. The applicants have found that this brings the advantage of high convenience, low volume for high presence of active ingredients, while avoiding any possible compatibility problems that may arise when the carbomer and the silicate are brought into an aqueous solution at high concentrations.

### EXAMPLES

The present invention is now illustrated by the following examples describing specific embodiments of the present invention as defined by the accompanying claims.

### EXAMPLE 1: PREPARATION OF AN ADDITIVE

An amount of 100 litre of additive was prepared according to the following recipe:

| Ingredients | %wt | Amounts (kg) |
|---|---|---|
| Water | 58.700 | 69.559 |
| hydroxyethane 1,1-diphosphonic acid | 0.300 | 0.356 |
| KOH (50%wt strength) | 7.000 | 8.295 |
| Fatty alcohol ethoxylate, phosphate ester | 7.000 | 8.295 |
| Urea | 13.500 | 15.998 |
| Sodium metasilicate | 13.500 | 15.998 |

The hydroxyethane 1,1-diphosphonic acid (HEDP) was obtained as a 60%wt solution in water from the company BASF. The fatty alcohol ethoxylate, phosphate ester, was obtained as Lutensil^{®} A-EP in a liquid form, also from the company BASF. The sodium metasilicate was obtained as the pentahydrate (Na₂SiO₃.5H₂O) in a solid, white, crystalline pure product from the company BRENNTAG. Its molar ratio (SiO₂/Na₂O) was in the range of 1.01-1.05. The potassium hydroxide (KOH) was obtained as a 50%wt strength solution in water from the company BRENNTAG. The solution had a density of about 1.512 kg/litre. The urea (a.k.a. carbonyl diamide) was obtained as a pure solid product in the form of white pearls from the company BRENNTAG.

The following procedure was followed to obtain the additive. Mixed and dissolved into the prescribed amount of water under simple stirring were the HEDP and the KOH solution until homogeneous. Subsequently the Lutensit A-EP was added slowly under stirring until homogeneous. After that, the urea and the sodium metasilicate were added and stirred until complete solution, to form the additive.

The additive had a pH of 13.2, a density at 20°C of 1.185 kg/dm³, a dry solids content resulting in 34.30%Brix, and a viscosity at 20°C of 1 mPa.s as measured with a Brookfield LVT (LVT= Low Viscosity Type) apparatus, standard spindle #1 at 60 rpm.

### EXAMPLE 2: PREPARATION OF AN ADHESIVE COMPOSITION

A total amount of 1000 kg of adhesive composition was prepared mixing together a water-based gel containing 5 kg of carbomer, 250 kg of pearl corn starch and 40 kg of the additive obtained from Example 1.

The carbomer used in this example was obtained as Carbopol^{®} 691 from the company Lubrizol Active Materials (US).

The adhesive composition obtained was tested in the lab for performance and gave an improved tack, surface tension, water retention, and penetration into paper.

Similar results could be obtained using Carbopol^{®} 674, 941, 980 or 981, or Floset^{™} TH 505 in replacement of the Carbopol^{®} 691 used above.

## Claims

1. An additive composition for an adhesive composition, the additive composition being in the form of an aqueous composition, a dry powder mixture or a kit in parts, and the additive composition comprising a cross-linked carbomer and a metasilicate of an alkali metal and/or an alkaline earth metal, wherein the carbomer and the metasilicate are present in the additive composition in a weight ratio of carbomer over metasilicate which is higher than 0.50 and at most 2.50, and wherein, if the additive composition is in the form of a dry powder mixture, the metasilicate is present in the dry powder mixture in a concentration of at least 1.70%wt.

2. The composition according to claim 1 wherein the metasilicate has a molar ratio of silica (SiO₂) to metal oxide (MeₓO), in which x may be equal to 1 or 2, in the range of 2.17:1 to 3.87:1.

3. The composition according to claim 1 or 2 wherein the alkali metal metasilicate is selected from the group consisting of sodium metasilicate, potassium metasilicate and lithium metasilicate.

4. The composition according to any one of the preceding claims wherein the carbomer is a water soluble polymer which is derived from an unsaturated acid, preferably from acrylic acid or methacrylic acid or a mixture thereof.

5. The composition according to any one of the preceding claims wherein the carbomer is in a form selected from a powder, a gel, and a solution.

6. The composition according to any one of the preceding claims wherein the metasilicate is in a form selected from a powder, a crystal, a gel, and a solution

7. The composition according to any one of the preceding claims in any one of the prescribed forms excluding the dry powder mixture, wherein the metasilicate is present in a concentration in the range of at least 0.01%wt and optionally at most 75%wt.

8. The composition according to any one of the preceding claims further comprising a boron containing compound or a zirconium and/or hafnium and/or aluminium containing compound as a boron alternative.

9. The composition according to the preceding claim being an aqueous suspension of the boron containing compound, the additive further comprising an additional dispersant which is selected from the group consisting of carboxymethyl cellulose (CMC), cellulose gum, gum arabic and xanthan gum.

10. An adhesive composition being in the form of an aqueous composition, a dry powder mixture or a kit in parts, the adhesive composition comprising at least one adhesive component selected from starch, dextrin and polyvinyl alcohol, the composition further comprising an amount of the additive composition according to any one of the preceding claims.

11. Use of the additive composition according to any one of claims 1-9 for improving the adhesive performance of an adhesive composition.

12. The use according to claim 11 wherein the adhesive composition comprises at least one of starch, dextrin, and polyvinyl alcohol.

13. Use of the adhesive composition according to claim 10 to form an adhesive bond with a substrate to produce an article comprising the substrate and the adhesive bond.

14. The use according to the preceding claim wherein the article is selected from the group consisting of laminated non-corrugated or corrugated paper or card board, cardboard, corrugated cardboard, optionally in the form of a tube or a wound tube, and a container or packaging container comprising cardboard or corrugated cardboard.

15. A method for producing an article comprising the step of applying the adhesive composition according to claim 10 to a sheet of fibres, cloth, paper, cardboard or corrugated cardboard.

## Patentansprüche

1. Eine Additivzusammensetzung für eine Klebstoffzusammensetzung, wobei die Additivzusammensetzung in Form einer wässrigen Zusammensetzung, einer Trockenpulvermischung oder eines aus Einzelteilen bestehenden Sets vorliegt, und die Additivzusammensetzung ein querverbundenes Carbomer und ein Metasilikat eines Alkalimetalls und/oder eines Erdalkalimetalls umfasst, wobei das Carbomer und das Metasilikat in der Additivzusammensetzung in einem Gewichtsverhältnis von Carbomer zu Metasilikat vorliegen, das höher als 0,50 und höchstens 2,50 ist, und wobei, wenn die Additivzusammensetzung in Form einer Trockenpulvermischung vorliegt, das Metasilikat in der Trockenpulvermischung in einer Konzentration von mindestens 1,70 Gew.-% vorliegt.

2. Die Zusammensetzung nach Anspruch 1, wobei das Metasilikat ein Stoffmengenverhältnis von Siliciumdioxid (SiO₂) zu Metalloxid (MeₓO) hat, in dem x gleich 1 oder 2 sein kann, im Bereich von 2,17:1 bis 3,87:1.

3. Die Zusammensetzung nach Anspruch 1 oder 2, wobei das Alkalimetall-Metasilikat aus der Gruppe bestehend aus Natriummetasilikat, Kaliummetasilikat und Lithiummetasilikat ausgewählt ist.

4. Die Zusammensetzung nach irgendeinem der vorigen Ansprüche, wobei das Carbomer ein wasserlösliches Polymer ist, das von einer ungesättigten Säure abgeleitet ist, bevorzugt von Acrylsäure oder Methacrylsäure oder einer Mischung davon.

5. Die Zusammensetzung nach irgendeinem der vorigen Ansprüche, wobei das Carbomer in einer Form ausgewählt aus einem Pulver, einem Gel und einer Lösung vorliegt.

6. Die Zusammensetzung nach irgendeinem der vorigen Ansprüche, wobei das Metasilikat in einer Form ausgewählt aus einem Pulver, einem Kristall, einem Gel und einer Lösung vorliegt.

7. Die Zusammensetzung nach irgendeinem der vorigen Ansprüche in irgendeiner der vorgeschriebenen Formen ausgenommen die Trockenpulvermischung, in der das Metasilikat in einer Konzentration im Bereich von mindestens 0,01 Gew.-% und optional höchstens 75 Gew.-% vorliegt.

8. Die Zusammensetzung nach irgendeinem der vorigen Ansprüche, welche ferner eine borhaltige Verbindung oder eine zirkonium- und/oder hafnium- und/oder aluminiumhaltige Verbindung als eine Alternative zu Bor enthält.

9. Die Zusammensetzung nach dem vorigen Anspruch als eine wässrige Suspension der borhaltigen Verbindung, wobei das Additiv ferner ein zusätzliches Dispergiermittel umfasst, welches aus der Gruppe bestehend aus Carboxymethylcellulose (CMC), Cellulosegummi, Gummi arabicum und Xanthangummi ausgewählt ist.

10. Eine Klebstoffzusammensetzung in Form einer wässrigen Zusammensetzung, einer Trockenpulvermischung oder eines aus Einzelteilen bestehenden Sets, wobei die Klebstoffzusammensetzung zumindest eine Klebstoffkomponente ausgewählt aus Stärke, Dextrin und Polyvinylalkohol umfasst, wobei die Zusammensetzung ferner eine Menge der Additivzusammensetzung nach irgendeinem der vorigen Ansprüche umfasst.

11. Verwendung der Additivzusammensetzung nach irgendeinem der Ansprüche 1 bis 9 zur Verbesserung der Klebeleistung einer Klebstoffzusammensetzung.

12. Die Verwendung nach Anspruch 11, wobei die Klebstoffzusammensetzung zumindest ein Element von Stärke, Dextrin und Polyvinylalkohol umfasst.

13. Verwendung der Klebstoffzusammensetzung nach Anspruch 10, um eine Klebeverbindung mit einem Substrat zu bilden, um einen Artikel herzustellen, der das Substrat und die Klebeverbindung umfasst.

14. Die Verwendung nach dem vorigen Anspruch, wobei der Artikel ausgewählt ist aus der Gruppe bestehend aus laminierter/m, nicht gewellter/m oder gewellter/m Pappe oder Karton, Pappkarton, Wellpappe, optional in Form einer Röhre oder einer gewickelten Röhre, und aus einem Behälter oder Verpackungsbehälter, welche Pappkarton oder Wellpappe umfassen.

15. Ein Verfahren zur Herstellung eines Artikels, welches den Schritt des Auftragens der Klebstoffzusammensetzung nach Anspruch 10 auf ein Blatt Fasern, Stoff, Papier, Pappkarton oder Wellpappe umfasst.

## Revendications

1. Composition d'additif pour une composition adhésive, la composition d'additif étant sous la forme d'une composition aqueuse, d'un mélange de poudre sèche ou d'un kit en plusieurs parties, et la composition d'additif comprenant un carbomère réticulé et un métasilicate d'un métal alcalin et/ou d'un métal alcalino-terreux, dans laquelle le carbomère et le métasilicate sont présents dans la composition d'additif à un rapport en poids du carbomère sur le métasilicate qui est supérieur à 0,50 et d'au plus 2,50, et dans laquelle, si la composition d'additif est sous la forme d'un mélange de poudre sèche, le métasilicate est présent dans le mélange de poudre sèche à une concentration d'au moins 1,70 %.

2. Composition selon la revendication 1, dans laquelle le métasilicate présente un rapport molaire silice (SiO₂) sur oxyde métallique (MeₓO), dans lequel x peut être égal à 1 ou 2, dans la plage de 2,17 : 1 à 3,87 : 1.

3. Composition selon la revendication 1 ou 2, dans laquelle le métasilicate de métal alcalin est sélectionné dans le groupe consistant en le métasilicate de sodium, le métasilicate de potassium et le métasilicate de lithium.

4. Composition selon l'une quelconque des revendications précédentes, dans laquelle le carbomère est un polymère hydrosoluble qui est dérivé d'un acide insaturé, de préférence de l'acide acrylique ou de l'acide méthacrylique ou d'un mélange de ceux-ci.

5. Composition selon l'une quelconque des revendications précédentes, dans laquelle le carbomère est sous une forme sélectionnée parmi une poudre, un gel, et une solution.

6. Composition selon l'une quelconque des revendications précédentes, dans laquelle le métasilicate est sous une forme sélectionnée parmi une poudre, un cristal, un gel, et une solution.

7. Composition selon l'une quelconque des revendications précédentes sous l'une quelconque des formes prescrites à l'exclusion du mélange de poudre sèche, dans laquelle le métasilicate est présent à une concentration dans la plage d'au moins 0,01 % en poids et facultativement d'au plus 75 % en poids.

8. Composition selon l'une quelconque des revendications précédentes, comprenant en outre un composé contenant du bore ou un composé contenant du zirconium et/ou du hafnium et/ou de l'aluminium en tant qu'alternative au bore.

9. Composition selon la revendication précédente qui est une suspension aqueuse du composé contenant du bore, l'additif comprenant en outre un dispersant supplémentaire qui est sélectionné dans le groupe consistant en une carboxyméthylcellulose (CMC), une gomme de cellulose, une gomme arabique et une gomme de xanthane.

10. Composition adhésive qui est sous la forme d'une composition aqueuse, d'un mélange de poudre sèche ou d'un kit en plusieurs parties, la composition adhésive comprenant au moins un composant adhésif sélectionné parmi un amidon, une dextrine et un poly(alcool vinylique), la composition comprenant en outre une quantité de la composition d'additif selon l'une quelconque des revendications précédentes.

11. Utilisation de la composition d'additif selon l'une quelconque des revendications 1-9 pour améliorer les performances adhésives d'une composition adhésive.

12. Utilisation selon la revendication 11, dans laquelle la composition adhésive comprend au moins l'un parmi un amidon, une dextrine, et un poly(alcool vinylique).

13. Utilisation de la composition adhésive selon la revendication 10 pour former une liaison adhésive avec un substrat afin de produire un article comprenant le substrat et la liaison adhésive.

14. Utilisation selon la revendication précédente, dans laquelle l'article est sélectionné dans le groupe consistant en un papier ou carton stratifié non ondulé ou ondulé, un carton, un carton ondulé, facultativement sous forme d'un tube ou d'un tube enroulé, et d'un récipient ou d'un récipient d'emballage comprenant un carton ou un carton ondulé.

15. Procédé de production d'un article comprenant l'étape d'application de la composition adhésive selon la revendication 10 sur une feuille de fibres, un tissu, un papier, un carton ou un carton ondulé.
